# EUROPEAN PATENT SPECIFICATION

(11) **EP 4 361 892 B1**
(45) Date of publication and mention of the grant of the patent: **30.09.2026**
(21) Application number: 23207084.7
(22) Date of filing: 31.10.2023
(51) Int. Cl.: G06N 3/063, G06N 3/0495, G06N 3/0464

(54) **METHODS AND SYSTEMS FOR PERFORMING A PER CHANNEL AFFINE TRANSFORMATION USING A NEURAL NETWORK ACCELERATOR**
VERFAHREN UND SYSTEME ZUR DURCHFÜHRUNG EINER AFFINEN TRANSFORMATION PRO KANAL UNTER VERWENDUNG EINES BESCHLEUNIGERS EINES NEURONALEN NETZWERKS
PROCÉDÉS ET SYSTÈMES POUR EFFECTUER UNE TRANSFORMATION AFFINE PAR CANAL À L'AIDE D'UN ACCÉLÉRATEUR DE RÉSEAU NEURONAL

(30) Priority: 31.10.2022 GB 202216151
(43) Date of publication of application: 01.05.2024
(73) Proprietor: Imagination Technologies Limited, Kings Langley, Hertfordshire WD4 8LZ (GB)
(72) Inventor: Gale, Timothy, Kings Langley, WD4 8LZ (GB); Sanchez, Javier, Kings Langley, WD4 8LZ (GB)
(74) Representative: Slingsby Partners LLP

(56) References cited:
- US-A1- 2022 207 678
- TAILIN LIANG ET AL: "Pruning and Quantization for Deep Neural Network Acceleration: A Survey", ARXIV.ORG, CORNELL UNIVERSITY LIBRARY, 201 OLIN LIBRARY CORNELL UNIVERSITY ITHACA, NY 14853, 11 March 2021 (2021-03-11), XP081901775
- ZHAO YIREN ET AL: "Automatic Generation of Multi-Precision Multi-Arithmetic CNN Accelerators for FPGAs", 2019 INTERNATIONAL CONFERENCE ON FIELD-PROGRAMMABLE TECHNOLOGY (ICFPT), IEEE, 9 December 2019 (2019-12-09), pages 45 - 53, XP033701649, DOI: 10.1109/ICFPT47387.2019.00014

## Description

### CROSS-REFERENCE TO RELATED APPLICATION

This application claims priority from UK Patent Application No. 2216151.7 filed on 31 October 2022.

### TECHNICAL FIELD

This application is directed to methods and systems for performing a per channel affine transformation on an input tensor using a neural network accelerator.

### BACKGROUND

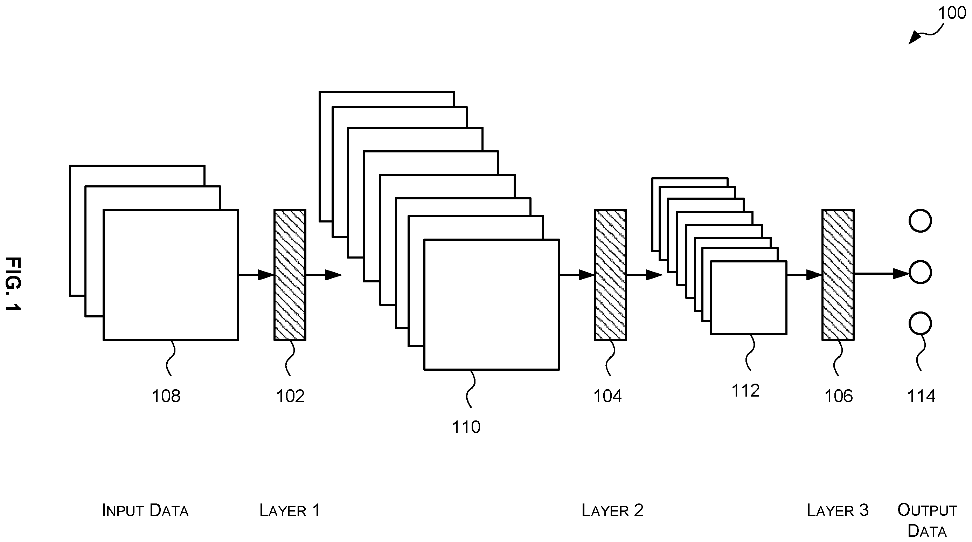

A Deep Neural Network (DNN) is a form of artificial neural network comprising a plurality of interconnected layers that can be used for machine learning applications. In particular, a DNN can be used in signal processing applications, including, but not limited to, image processing and computer vision applications. FIG. 1 illustrates an example DNN 100 that comprises a plurality of layers 102, 104, 106. Each layer 102, 104, 106 receives input data, and processes the input data in accordance with the layer to produce output data. The output data is either provided to another layer as the input data or is output as the final output data of the DNN. For example, in the DNN 100 of FIG. 1, the first layer 102 receives the original input data 108 to the DNN 100 and processes the input data in accordance with the first layer 102 to produce output data 110. The output data 110 of the first layer 102 becomes the input data to the second layer 104, and the second layer 104 processes the input data 110 in accordance with the second layer 104 to produce output data 112. The output data 112 of the second layer 104 becomes the input data to the third layer 106, and the third layer 106 processes the input data 112 in accordance with the third layer 106 to produce output data 114. The output data 114 of the third layer 106 is then output as the final output data of the DNN. Where the DNN is used for classification, the final output data may be a vector of length A, wherein A is the number of classes and each value in the vector represents the probability of a certain class.

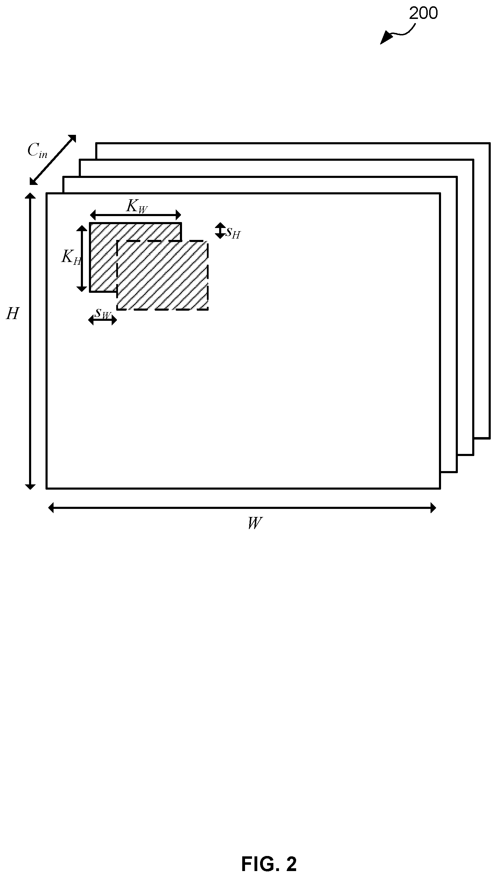

The data input to and output from a layer of a DNN can be described as a tensor. As is known to those of skill in the art, a tensor is a generalization of vectors and matrices and can be considered as an n-dimensional array. A vector is a one-dimensional tensor, and a matrix is a two-dimensional tensor. The tensors in a DNN are often, but are not necessarily, four-dimensional. Reference is made to FIG. 2 which illustrates an example four-dimensional (4D) tensor 200 in which one dimension (e.g. corresponding to the batch size) has been suppressed for visualisation purposes. The 4D tensor 200 may be described as comprising one or more 3D tensors, wherein each 3D tensor comprises *Cᵢₙ* planes of data, where each plane has a dimension *W* x *H*. Each plane may be referred to as a channel of the tensor. The number of 3D tensors may be referred to as the batch size. Each 3D tensor may be, for example, an image. An element of a tensor may be referred to as a tensel, akin to how an element of a picture is referred to as a pixel.

The processing that is performed on the input data to a layer depends on the type of layer. For example, each layer of a DNN may be one of a plurality of different types. Example DNN layer types include, but are not limited to, a convolution layer, an activation layer, a normalisation layer, a pooling layer, a fully connected layer, and a batch normalisation layer. It will be evident to a person of skill in the art that these are example DNN layer types and that this is not an exhaustive list and there may be other DNN layer types.

A convolution layer convolves the input data with weights associated with the layer. Specifically, each convolution layer is associated with a plurality of weights *k*₁ *... k_{g},* which may also be referred to as filter weights or coefficients. The weights are grouped to form one or more filters or kernels, and each filter may be associated with an offset bias *bias.* Each filter may have a dimension *K_{W} x K_{H}* x *Cᵢₙ* (i.e., each filter may comprise a set of *K_{W} x K_{H}* x *Cᵢₙ* weights *k*) and may be applied to the input data according to a convolution operation across steps *s_{W}* and *s_{H}* in the *W* and *H* directions as shown in FIG. 2. The step sizes *s_{W}* and *s_{H}* may be referred to as the strides of the convolution. The number and dimensions of filters and/or the number of weights per filter may vary between convolution layers. A convolutional neural network (CNN), which is a specific type of DNN that is effective for image recognition and classification, generally comprises a plurality of convolution layers.

An activation layer, which often, but not necessarily, follows a convolution layer, applies one or more activation functions to the input data to the layer. An activation function receives an input tensor and performs a certain non-linear mathematical operation on each value or element in the input tensor. In other words, the activation function operates on each value or element in the input tensor separately. In some examples, an activation layer may act as rectified linear unit (ReLU) by implementing a ReLU function or a leaky rectified linear unit (LReLU) by implementing a LReLU function.

A normalisation layer is configured to perform a normalising function, such as a Local Response Normalisation (LRN) function on the input data.

A pooling layer performs a pooling function, such as a max, min or average function, to summarise subsets of the input data. The purpose of a pooling layer is thus to reduce the spatial size of the representation to reduce the number of parameters and computation in the network, and hence to also control overfitting.

A fully connected layer, which often, but not necessarily, follows a plurality of convolution and pooling layers, takes a two-dimensional tensor (e.g. a tensor with a batch size and a channel dimension) of input data values and outputs a two-dimensional tensor (e.g. a tensor with a batch size dimension and a channel dimension). Where the DNN is used for classification, the output may have A channels where A is the number of classes, and each value in the tensor may represent the probability of a certain class. The output tensor is generated through a matrix multiplication of a set of weights, optionally followed by a bias offset. A fully connected layer thus receives a set of weights and may receive a bias.

A batch normalisation (often referred to as "batch norm") layer, which often, but not necessarily, follows a convolution layer, applies a per channel affine transformation to an input tensor. Batch normalisation layers may be added to a neural network to make training of the neural network faster and more stable by normalisation of a subsequent layer's inputs by recentring and re-scaling.

Accordingly, each layer of a DNN receives input data values (e.g., an input tensor) and generates output data values (e.g., an output tensor); and some layers (such as, but not limited to, convolution layers and fully connected layers) also receive weights and/or biases. The input data values, output data values, weights and biases of the layers of a DNN may collectively be referred to as the network parameters of the DNN.

Performing forward and backward passes of a DNN are often expensive to implement in terms of computation, bandwidth and power. Accordingly, neural network accelerators (NNAs) have been developed that allow DNNs to be implemented in an efficient manner (e.g., in a manner that requires less silicon area or less processing power).

For an NNA to implement a neural network the parameters of the neural network are represented in a number format. Two common types of number formats are fixed point number formats and floating point number formats. As is known to those skilled in the art, a fixed point number format has a fixed number of digits after the radix point (e.g., decimal point or binary point). In contrast, a floating point number format does not have a fixed radix point (i.e., it can "float"). In other words, the radix point can be placed in multiple places within the number. There are also other formats that are similar to fixed point number formats but where the exponent is a fixed real number (stored in floating point format) rather than an integer. For these formats 2*^{exponent}* is commonly referred to as the "scale". Such formats may also possess a "zero point" which acts as an offset to the stored values to allow for asymmetric number ranges. The stored value *xᵢₙₜ* corresponds to the value *x = scale* * (*xᵢₙₜ - zero point*)*.* While representing the network parameters of a DNN in a floating point number format may allow more accurate or precise output data to be produced, processing network parameters in a floating point number format is complex which tends to increase the silicon area, power consumption, memory and bandwidth consumption, and complexity of the hardware to implement the neural network. Accordingly, an NNA may be configured to represent at least some of the network parameters in another format, such as a fixed point number format, to reduce the hardware area, power consumption, memory and bandwidth consumption and complexity of the hardware to implement the neural network.

Generally, the fewer the bits that are used to represent the network parameters of a DNN (e.g., input data values, weights, biases, and output data values), the more efficiently the DNN can be implemented in hardware. However, typically the fewer the bits that are used to represent the network parameters of a DNN (e.g., input data values, weights, biases, and output data values) the less accurate the DNN becomes. Accordingly, it is desirable to implement a DNN using a reduced number of bits without compromising the accuracy of the DNN.

The embodiments described below are provided by way of example only and are not limiting of implementations which solve any or all of the disadvantages of methods and systems for implementing all or a part of a neural network on a neural network accelerator.
US 2022/207678 A1 provides an apparatus and method of guided neural network model for image processing. An apparatus may comprise a guidance map generator, a synthesis network and an accelerator.
TAILIN LIANG ET AL: "Pruning and Quantization for DeepNeural Network Acceleration: A Survey" discloses a survey on two types of network compression: pruning and quantization. Pruning can be categorized as static if it is performed offline or dynamic if it is performed at run-time. TAILIN LIANG ET AL compares pruning techniques and describe criteria used to remove redundant computations.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

The present invention is defined in the independent claims. Further embodiments are set forth in the dependent claims. Described herein are methods and neural network accelerators for implementing a per channel quantised affine transformation on an input tensor to generate an output tensor, the affine transformation for a channel comprising a multiplication by a multiplication parameter for the channel followed by an addition of an addition parameter for the channel. The neural network accelerator comprises a depth-wise convolution processing unit configured to accelerate depth-wise convolution operations, and a high-precision re-quantisation processing unit configured to accelerate re-quantisation or quantisation operations. The methods include implementing each affine transformation as an addition followed by a multiplication by: implementing the additions by performing, using the depth-wise convolution processing unit, a 1x1 depth-wise convolution on the input tensor based on a weight and a bias for each channel of the input tensor, wherein the weight for a channel is set to an addition scale factor for the channel and the bias for a channel is set to an integer addition value for the channel; and implementing the multiplications by scaling, using the high-precision re-quantisation processing unit, each value output from the depth-wise convolution processing unit, by a high-precision multiplication value for the corresponding channel.

A first aspect provides a method according to claim 1.

The input tensor may comprise a plurality of input tensels, each input tensel is in a quantised number format represented by an integer value and a common input scale. The output tensor may comprise a plurality of output tensels, each output tensel is in a quantised number format represented by an integer value and a common output scale. The 1x1 depth-wise convolution may be performed on the integer values of the input tensor. The high-precision re-quantisation processing unit may output the integer values of the output tensor.

For each channel of the input tensor that has a non-zero multiplication parameter: the addition value for the channel may be based on the addition parameter for the channel, the addition scale factor for the channel, the multiplication parameter for the channel, and the common input scale, and the high-precision multiplication value for the channel may be based on the multiplication parameter for the channel, the addition scale factor for the channel, the common input scale and the common output scale.

For each channel of the input tensor that has a non-zero multiplication parameter, the integer addition value may represent a ratio of (i) a product of the addition scale factor for the channel and an addition variable for the channel and (ii) a product of the multiplication parameter for the channel and the common input scale, wherein the addition value for the channel is based on the addition parameter for the channel.

The addition variable for a channel may be equal to the addition parameter for that channel.

The addition variable for a channel may be a combination of the addition parameter for that channel and one or more other values.

Each input tensel may be in an asymmetric quantised number format based on a common input zero point, and the addition variable for a channel may be a difference between the addition parameter for the channel and a product of the multiplication parameter for that channel, the common input scale, and the common input zero point.

Each output tensel may be in an asymmetric quantised number format based on a common output zero point, and the addition variable for a channel may be a combination of the addition parameter for the channel and a product of the common output scale and the common output zero point.

Each input tensel may be in an asymmetric quantised number format based on a common input zero point and each output tensel is in an asymmetric quantised number format based on a common output zero point, and the addition variable for a channel is a combination of the addition parameter for the channel, the product of the common output scale and the common output zero point, and the product of the multiplication parameter for that channel, the common input scale, and the common input zero point.

For each channel of the input tensor that has a non-zero multiplication parameter, the high-precision multiplication value for the channel may represent a ratio of (i) the product of the multiplication parameter for the channel and the common input scale, and (ii) the product of the common output scale and the addition scale factor for that channel.

For each channel of the input tensor that has a non-zero multiplication parameter, the addition scale factor may be an integer greater than or equal to one.

Each channel of the input tensor that has a non-zero multiplication parameter may have the same addition scale factor.

The addition scale factor for each channel of the input tensor that has a non-zero multiplication parameter may be a largest weight accepted by the depth-wise convolution processing unit.

The addition scale factor for each channel of the input tensor that has a non-zero multiplication parameter may be a largest power of two weight accepted by the depth-wise convolution processing unit.

For each channel of the input tensor that has a non-zero multiplication factor, the addition scale factor may be equal to one.

The input tensor may comprise at least two channels that have a non-zero multiplication parameter, and two of the at least two channels may have a different addition scale factor.

The addition scale factor, for at least one channel of the input tensor that has a non-zero multiplication parameter, may be an addition scale factor that minimizes $\left|\frac{1}{m}Round\left(\frac{mb}{{as}_{x}}\right)-\frac{b}{{as}_{x}}\right|$ wherein m is the addition scale factor for the channel, b is the addition parameter for the channel, *a* is the multiplication parameter for the channel and *sₓ* is the common input scale.

For each channel of the input tensor that has a multiplication parameter that is zero, or substantially zero: the addition scale factor for the channel may be equal to zero; the addition value for the channel may be an integer that represents a ratio of the addition parameter for the channel and the common output scale; and the high-precision multiplication value for the channel may be equal to one.

The high-precision re-quantisation processing unit may be configured to scale an input value by multiplying the input value by a high-precision multiplication input and shifting the output of the multiplication in accordance with a shift value, and the high-precision multiplication value for a channel is provided to the high-precision re-quantisation processing unit as a multiplication input and a shift value.

The multiplication parameter for a channel may be a floating point value and the addition parameter for a channel may be a floating point value.

The neural network accelerator may comprise a convolution processing unit configured to accelerate the processing of two-dimensional convolution operations and the convolution processing unit is separate and distinct from the depth-wise convolution processing unit.

The method may further comprise computing the addition value for each channel offline using a device external to the neural network accelerator prior to performing the 1x1 depth-wise convolution.

The depth-wise convolution processing unit may comprise hardware to remove a zero point from the input integer values. The method may further comprise, when the input tensels are in an asymmetric quantised number format based on a common input zero point, causing the depth-wise convolution processing unit to remove the common input zero point offset from the received input integers of channels of the input tensor with a non-zero multiplication parameter, prior to performing the 1x1 depth-wise convolution.

The high-precision re-quantisation processing unit may comprise hardware to add a zero point to scaled values. The method may further comprise, when the output tensels are in an asymmetric quantised number format based on a common output zero point, causing the high-precision re-quantisation processing unit to add the common output zero point to the scaled values corresponding to channels of the input tensor with a non-zero multiplication parameter.

The depth-wise convolution processing unit may be configured to receive biases up to a predetermined maximum number of bits.

A second aspect provides a neural network accelerator comprising: a depth-wise convolution processing unit configured to accelerate processing of a depth-wise convolution on a received input tensor; and a high-precision re-quantisation processing unit configured to accelerate processing of a per channel re-quantisation operation on a received input tensor; wherein the neural network accelerator is configured to performing a per channel quantised affine transformation on an input tensor to generate an output tensor, the affine transformation for a channel comprising a multiplication by a multiplication parameter for the channel followed by an addition of an addition parameter for that channel, by: implementing each affine transformation as an addition followed by a multiplication by: implementing the additions by performing, using the depth-wise convolution processing unit, a 1x1 depth-wise convolution on the input tensor based on a weight and a bias for each channel of the input tensor, wherein the weight for a channel is set to an addition scale factor for the channel and the bias for a channel is set to an integer addition value for the channel; and implementing the multiplications by scaling, using the high-precision re-quantisation processing unit, each value output from the depth-wise convolution processing unit, by a high-precision multiplication value for the corresponding channel.

A third aspect provides a neural network accelerator configured to perform the method of the first aspect.

A fourth aspect provides a computer readable storage medium having stored thereon computer readable code configured to cause a neural network accelerator to perform the method of the first aspect when the code is run.

A fifth aspect provides a method of processing input data in accordance with a neural network comprising at least one batch normalisation layer that implements a per channel affine transformation at a neural network accelerator by implementing the batch normalisation layer on the neural network accelerator in accordance with the first aspect.

The neural network accelerators described herein may be embodied in hardware on an integrated circuit. There may be provided a method of manufacturing, at an integrated circuit manufacturing system, a neural network accelerator described herein. There may be provided an integrated circuit definition dataset that, when processed in an integrated circuit manufacturing system, configures the system to manufacture an integrated circuit that embodies a neural network accelerator described herein. There may be provided a non-transitory computer readable storage medium having stored thereon a computer readable description of a neural network accelerator that, when processed in an integrated circuit manufacturing system, causes the integrated circuit manufacturing system to manufacture an integrated circuit embodying the neural network accelerator.

There may be provided an integrated circuit manufacturing system comprising: a non-transitory computer readable storage medium having stored thereon a computer readable description of a neural network accelerator described herein; a layout processing system configured to process the computer readable description so as to generate a circuit layout description of an integrated circuit embodying the neural network accelerator; and an integrated circuit generation system configured to manufacture an integrated circuit embodying the neural network accelerator according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
FIG. 1 is a schematic diagram of an example deep neural network (DNN);
FIG. 2 is a schematic diagram illustrating performing an example convolution operation on an example tensor in a DNN;
FIG. 3 is a schematic diagram illustrating an example quantised affine transformation;
FIG. 4 is a schematic diagram illustrating the example quantised affine transformation of FIG. 3 represented in terms of the quantised input and output values;
FIG. 5 is a block diagram of a first example neural network accelerator comprising a depth-wise convolution processing unit and a re-quantisation processing unit;
FIG. 6 is a block diagram of an example implementation of the depth-wise convolution processing unit of FIG. 5;
FIG. 7 is a schematic diagram illustrating an example 2D convolution;
FIG. 8 is a schematic diagram illustrating an example depth-wise convolution;
FIG. 9 is a block diagram of an example implementation of the re-quantisation processing unit of FIG. 5;
FIG. 10 is a schematic diagram illustrating a first example method of implementing a per-channel quantised affine transformation on a neural network accelerator with a depth-wise convolution processing unit and a high-precision re-quantisation processing unit
FIG. 11 is a schematic diagram illustrating a second example method of implementing a per-channel quantised affine transformation on a neural network accelerator with a depth-wise convolution processing unit and a high-precision re-quantisation processing unit;
FIG. 12 is a flow diagram of an example method of implementing a per-channel quantised affine transformation on a neural network accelerator with a depth-wise convolution processing unit and a high-precision re-quantisation processing unit;
FIG. 13 is a block diagram of an example computer system in which a neural network accelerator described herein may be implemented; and
FIG. 14 is a block diagram of an integrated circuit manufacturing system for generating an integrated circuit embodying a neural network accelerator described herein.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

As described above, a DNN may comprise one or more batch normalisation layers each of which is implemented at inference time (e.g. during a forward pass of the neural network) as a per-channel affine transformation. In other words, for a batch normalisation layer there is an affine transformation per input channel that is applied to the corresponding, or respective, input channel. The affine transformation applied to an input channel may be represented by equation (1) where x is the input element or tensel, y is the output element or tensel, and *a* and b are floating point parameters. The first parameter *a* may be referred herein to as the multiplication parameter and the second parameter b may be referred to as the addition parameter. The affine transformations associated with different input channels may be the same or different. In other words, the parameters *a* and/or b may differ between input channels. $y = ax + b$

As described above, DNNs are often expensive to implement in terms of computation, bandwidth and power. Accordingly, neural network accelerators (NNAs) have been developed that allow DNNs to be implemented in an efficient manner (e.g., in a manner that requires less silicon area or less processing power).

An NNA is hardware that is designed to accelerate the processing of a neural network. As is known to those of skill in the art, a hardware accelerator is hardware designed to perform a specific set of one or more functions more efficiently than a general processing unit, such as a central processing unit (CPU). Accordingly, in contrast to a general CPU which can be configured to perform any number of functions, an accelerator can only perform a limited set of one or more functions. NNAs have one or more network processing hardware units (which may simply be referred to as processing units) which are each designed to accelerate one or more neural network operations. A neural network operation is defined herein as an operation that is used to implement all or a part of a neural network layer. A neural network layer may be implemented by one or more neural network operations. Example neural network operations include, but are not limited to, convolution operations, non-linear operations, pooling operations and normalisation operations.

An NNA may therefore have, for example, a convolution processing unit which is configured to accelerate convolution operations, an activation processing unit which is configured to accelerate non-linear operations, a pooling processing unit which is configured to accelerate pooling operations, and/or a normalisation processing unit configured to accelerate normalisation operations. It will be evident to a person of skill in the art that this is just an example set of network processing hardware units that an NNA may have, and NNAs may have additional network processing hardware units, fewer network processing hardware units or a different combination of network processing hardware units.

As described above, while representing the network parameters of a neural network in a floating point number format may allow more accurate or precise output data to be produced by the neural network, processing network parameters in a floating point number format in hardware is complex which tends to increase the silicon area, power consumption, memory and bandwidth consumption, and complexity of an NNA compared to an NNA that processes network parameters in quantised formats, such as, but not limited to, fixed point number formats. Accordingly, an NNA may comprise hardware that is configured to receive and process network parameters in a quantised format, such as a fixed point number format, to reduce the area, power consumption, memory and bandwidth consumption, and complexity of the NNA.

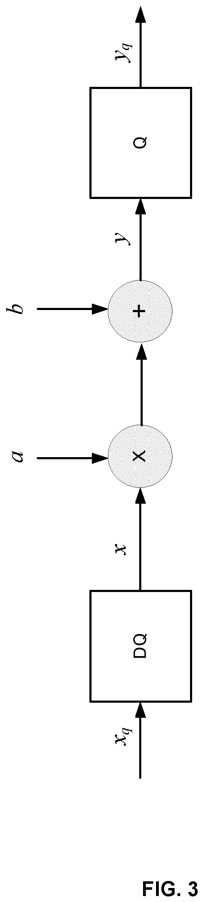

Accordingly, the input and output of an affine transformation implemented on an NNA may be quantised integer values *x_{q}* and *y_{q}*. Ideally the input *x_{q}* is de-quantised by a de-quantisation operation ("DQ") to generate a floating point input x so that the operations are performed in floating point, then the output y is quantised by a quantisation operation ("Q") as shown in FIG. 3. An affine transformation that receives a quantised input and produces a quantised output is referred to herein as a quantised affine transformation. Each quantised value is represented by a scale *sₓ, s_{y}* and an integer value *x_{q}, y_{q}* as shown in equations (2) and (3). The integer values *x_{q}, y_{q}* may be in signed or unsigned formats. The scales may be floating point values or powers of two (e.g. *sₓ =* 2*^{expₓ}, s_{y}* = 2*^{exp_{y}}*). $x = {s}_{x} {x}_{q}$ $y = {s}_{y} {y}_{q}$

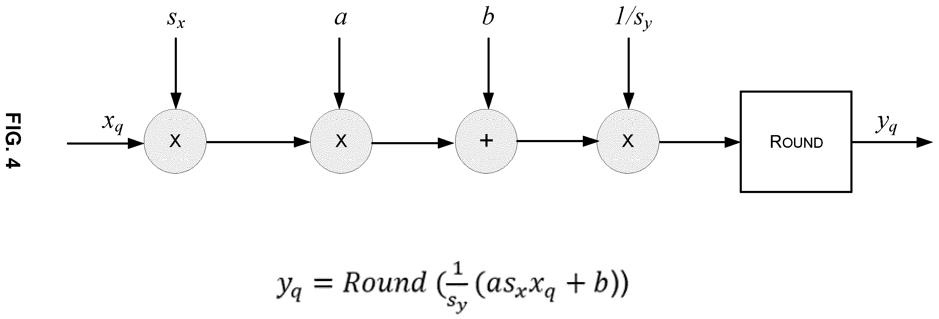

The affine transformation of equation (1) can be expressed in terms of the quantised values of equations (2) and (3) as shown in equation (4) and illustrated in FIG. 4. Although not shown in FIG. 4, or expressed in equation (4), in some cases, the output *y_{q}* may be subsequently clamped so that it fits into an output integer format, e.g. for a signed 8 bit integer, the output may be clamped to the range [-128, 127]. ${y}_{q} = Round \left(\frac{1}{{s}_{y}}\left({as}_{x}{x}_{q}+b\right)\right)$

While the parameters (*a, b*) of the affine transformations may also be quantised, testing has shown that performing an affine transformation, and particularly an affine transformation that is part of batch normalisation layer, with quantised parameters can significantly reduce the accuracy of the affine transformation which can reduce the accuracy of the neural network itself. The parameters (*a, b*) for an affine transformation that forms part of a batch normalisation layer, are usually left unquantised during quantisation aware training (i.e. training in which the neural network is trained using quantised weights and input data values) because during training the parameters (*a, b*) change, potentially significantly, from batch to batch because of their dependence on the batch statistics, making it difficult to select appropriate quantisation parameters for them. Accordingly, ideally a quantised affine transformation would be performed in floating point (e.g. via floating point multiplication and addition) and the result quantised as shown in equation (4). However, for the reasons noted above, an NNA may not have hardware to perform the desired floating point operations in an efficient manner, certainly not for a stand-alone per channel quantised affine transformation. Specifically, quite often a batch normalisation layer follows a convolution layer and thus can be merged or fused with the convolution layer and performed efficiently using a convolution processing unit of an NNA. However, in some networks there is not a preceding convolution layer, or it would not be efficient (for one or more reasons) to merge a batch normalisation layer with a convolution layer. A per-channel affine transformation (which may or may not form part of a batch normalisation layer) that is not fused or merged with a convolution layer (or a convolution operation) is referred to herein as a stand-alone per-channel affine transformation. As described in more detail below, convolution processing units are generally complex hardware designed to implement 2D convolutions, thus it may not be efficient to perform a stand-alone per-channel affine transformation on a convolution processing unit.

Accordingly, the inventors have developed a method that allows a per-channel quantised affine transformation (and in particular a standalone per-channel quantised affine transformation) to be performed efficiently and accurately on a neural network accelerator with (i) a depth-wise convolution processing unit configured to accelerate processing of a quantised depth-wise convolution, and (ii) a re-quantisation processing unit configured to accelerate a high-precision per-channel re-quantisation operation. Specifically, in the methods described herein each quantised affine transformation is represented as an addition followed by a multiplication and the additions are implemented by performing, using the depth-wise convolution processing unit, a 1x1 depth-wise convolution on the input tensor using appropriate weight and bias values, and the multiplications are implemented by, scaling, using the high-precision re-quantisation processing unit, the outputs of the depth-wise convolution processing unit by an appropriate per channel multiplication value. The methods described herein take advantage of (i) the proficiency and efficiency of the depth-wise convolution processing unit and the re-quantisation processing unit at performing per-channel operations, and (ii) the high-precision addition and scaling that can be performed by the depth-wise convolution processing unit and the re-quantisation processing unit respectively.

As described in more detail below, testing has shown that implementing a per-channel quantised affine transformation in accordance with the methods described herein can achieve similar accuracy as performing the per channel quantised affine transformation in floating point (e.g. performing floating point multiplications and additions, e.g. in accordance with equation (4)). In other words, the methods described herein can be used to accurately emulate a floating point implementation of a per-channel quantised affine transformation without performing floating point operations.

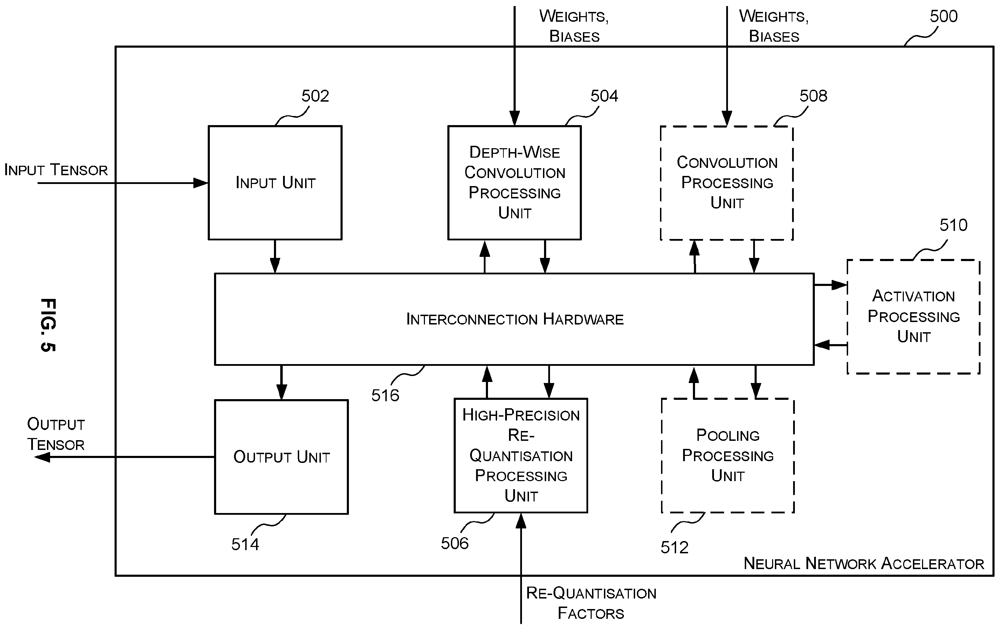

An example of a neural network accelerator 500 suitable for implementing the methods described herein is shown in FIG. 5. The neural network accelerator 500 comprises an input unit 502, a plurality of processing units 504, 506, 508, 510, 512, an output unit 514, and interconnection hardware 516 which statically or dynamically connects the other units (e.g. the input unit 502, the processing units 504, 506, 508, 510, 512 and the output unit 514). The NNA 500 is configured to: receive input data (an input tensor), implement all or a portion of one or more layers of a neural network by processing the input data (input tensor) using one or more of the processing units to generate output data (an output tensor), and output the output data (output tensor) from the NNA. The receiving of input data at the NNA and processing it using one or more processing units is referred to as a hardware pass of the NNA. It may take one or more hardware passes of an NNA to implement a neural network. For example, in a first hardware pass input data may be input to the NNA for processing in accordance with a convolution layer by the convolution processing unit, and then the output of the first hardware pass may be input to the NNA in a second hardware pass and processed in accordance with a pooling layer by the pooling processing unit. A neural network may be mapped to hardware passes of an NNA in any suitable manner.

The input unit 502 is hardware configured to receive and store the input data to the neural network accelerator 500. The input data may be received from external memory. In some examples, the input unit 502 may comprise one or more buffers to store the received input data. Although the example NNA 500 of FIG. 5 comprises a single input unit 502, other example NNAs may comprise multiple input units. The term "input data to the NNA" is used herein to mean the input data to be processed by one or more processing units (which may or may not be equivalent to the input data to a layer of a neural network) and may be distinguished from other parameters used in a neural network such as weights, biases, etc. As described in more detail below, in some cases, the other input parameters may be input to the NNA in another manner (e.g. loaded into an internal or external storage unit associated with a specific processing unit). For example, the weights and biases for a convolution layer may be loaded into a buffer linked to the convolution processing unit 508.

Each processing unit 504, 506, 508, 510, 512, is itself an accelerator configured to accelerate performing one or more neural network operations on input data. Specifically, each processing unit 504, 506, 508, 510, 512 is configured to receive an input tensor and perform, via hardware logic, one or more operations on the input tensor to generate an output tensor. The NNA 500 of FIG. 5 comprises a depth-wise convolution processing unit 504 that is configured to accelerate a depth-wise convolution operation, and a high-precision re-quantisation processing unit 506 that is configured to accelerate a re-quantisation operation. However, the NNA 500 may comprise one or more other processing units. For example, the NNA 500 may additionally comprise one or more of a convolution processing unit 508 which is configured to accelerate a convolution operation, an activation processing unit 510 which is configured to accelerate non-linear operations, and a pooling processing unit 512 which is configured to accelerate a pooling operation. It will be evident to a person of skill in the art that this is just an example set of processing units and that other NNAs may have additional processing units, fewer processing units and/or different processing units depending, for example, on the type of neural networks they are intended to process. In some cases, one or more of the processing units may be combined. For example, in some cases, it may be efficient to combine the pooling processing unit and the depth-wise convolution processing unit since they both perform per-channel operations.

The output unit 514 is hardware configured to receive the output tensor generated by processing the input data via one or more processing units 504, 506, 508, 510, 512. In some cases, the output unit 514 may have a buffer or other storage for temporarily storing the output tensor prior to outputting the output tensor from the NNA 500. In some cases, the output unit 514 may be configured to save the output tensor in external memory (i.e., memory that is external to the neural network accelerator).

The interconnection hardware 516 statically or dynamically connects the input unit, one or more processing units, and the output unit to allow input data to the neural network accelerator to flow through (e.g. be processed by) one or more processing units and then be output from the neural network accelerator. In some cases, the interconnection hardware 516 may comprise fixed hardware connections between the input unit 502, the processing units 504, 506, 508, 510, 512, and the output unit 514 that allow data to flow through the units in a limited number of ways. However, in other cases, the interconnection hardware 516 may comprises hardware that can dynamically connect the units 502-514 of the neural network accelerator in a plurality of different ways in response to one or more control signals. For example, the interconnection hardware 516 may comprise a crossbar and the units 502-514 may be connected to the crossbar in such a manner that the crossbar can dynamically connect the units in a plurality of different ways in response to one or more control signals. For example, in one hardware pass the crossbar may connect the output of the input unit to the depth-wise convolution processing unit 504, connect the output of the depth-wise convolution processing unit 504 to the high-precision re-quantisation processing unit, and then connect the output of the high-precision re-quantisation processing unit to the input of the output unit 514 so that the input data for the hardware pass is processed by the depth-wise convolution processing unit then the high-precision re-quantisation processing unit. In another hardware pass, the crossbar may connect the output of the input unit 502 to the convolution processing unit 508, and then the output of the convolution processing unit 508 to the input of the output unit 514 so that the input data for the hardware pass is processed by the convolution processing unit. Accordingly, in these cases the connections between the units 502-514 of the neural network accelerator (and thus the manner in which data may flow through the units of the NNA) are not fixed or static.

Although, not shown, the units 502-514 and the interconnection hardware 516 of the NNA may receive control information for each hardware pass indicating which units are to be active or used in the hardware pass and how each active unit and the interconnection unit are to be configured for that hardware pass. The control information may also indicate other information such as the formats of the input and output data of the units.

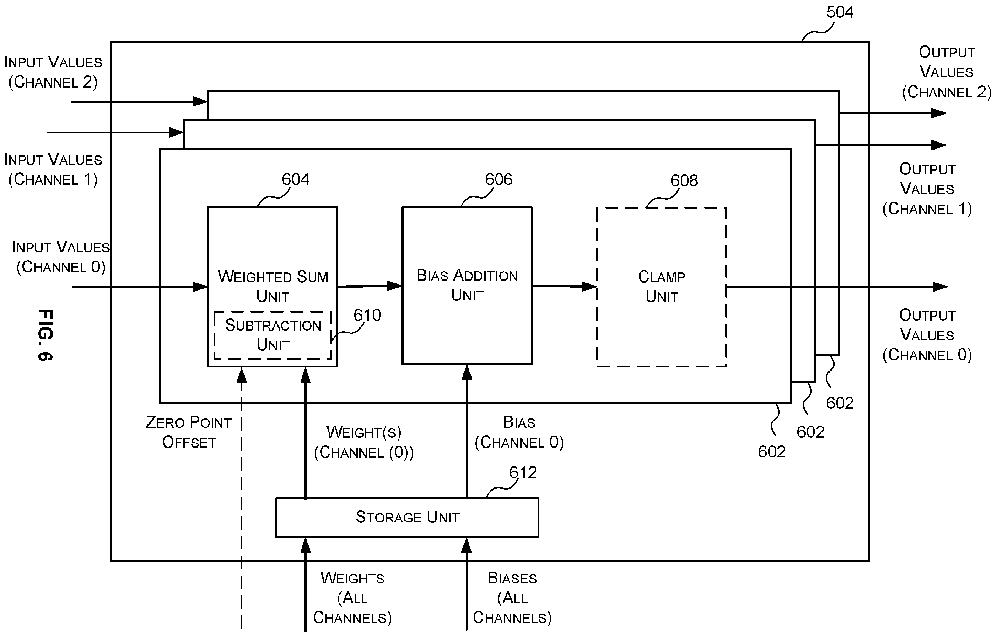

Reference is now made to FIG. 6 which illustrates an example implementation of the depth-wise convolution processing unit 504 of FIG. 5. As described above, the depth-wise convolution processing unit 504 is configured to accelerate a depth-wise convolution operation. Many neural network accelerators have a convolution processing unit that is configured to accelerate convolution operations, and specifically 2D convolutions. As is known to those of a skill in the art, in a 2D convolution the weights form a plurality of 3D filters, and each of the plurality of filters is convolved with a 3D input tensor. Each filter has the same number of channels as the input tensor and produces one channel of the output. Therefore, if there are *L* filters, there are *L* channels in the output. Accordingly, the number of filters may also be referred to as the number of output channels.

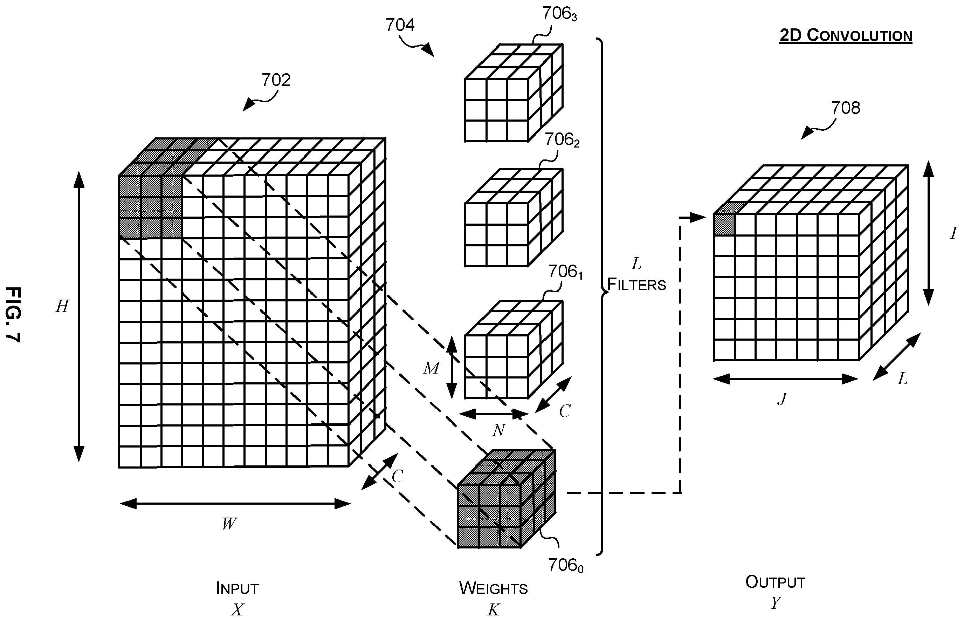

FIG. 7 illustrates an example 2D convolution between a three-dimensional (3D) input tensor *X* 702 with a height *H,* width *W,* and channels *C* and a set of weights *K* 704 that form a four-dimensional (4D) tensor comprising a plurality of (e.g. *L*) 3D filters or kernels 706₀, 706₁, 706₂, 706₃ with a height *M,* width *N,* and channels *C.* Each filter 706₀, 706₁, 706₂, 706₃ is convolved with the 3D input tensor *X* 702 to produce one channel, or one plane, of the output tensor *Y* 708. Each channel of the output tensor *Y* is generated by sliding a filter 706₀, 706₁, 706₂ or 706₃ over the input tensor *X* in the height dimension *H* and the width dimension *W* (in accordance with the stride(s) and dilation(s) of the convolution) and generating the dot product of the input values and the weights at each position. There may be a bias per filter which is added to the result of the corresponding dot products.

While 2D convolutions are the most common type of convolutions implemented in a neural network, other convolutions, such as depth-wise convolutions, are becoming more prominent in neural networks. As is known to those of skill in the art, in a depth-wise convolution there is a set of one or more filters per channel of the input tensor, and each channel of the input tensor is convolved with each filter in the corresponding set of filters to generate an output channel. In some cases, there is a single filter per channel, but in other cases there may be multiple filters per channel. The number of filters per channel may be referred to as the channel multiplier, *T*. Therefore the number of channels of the output tensor of a depth-wise convolution is *T* * *C*.

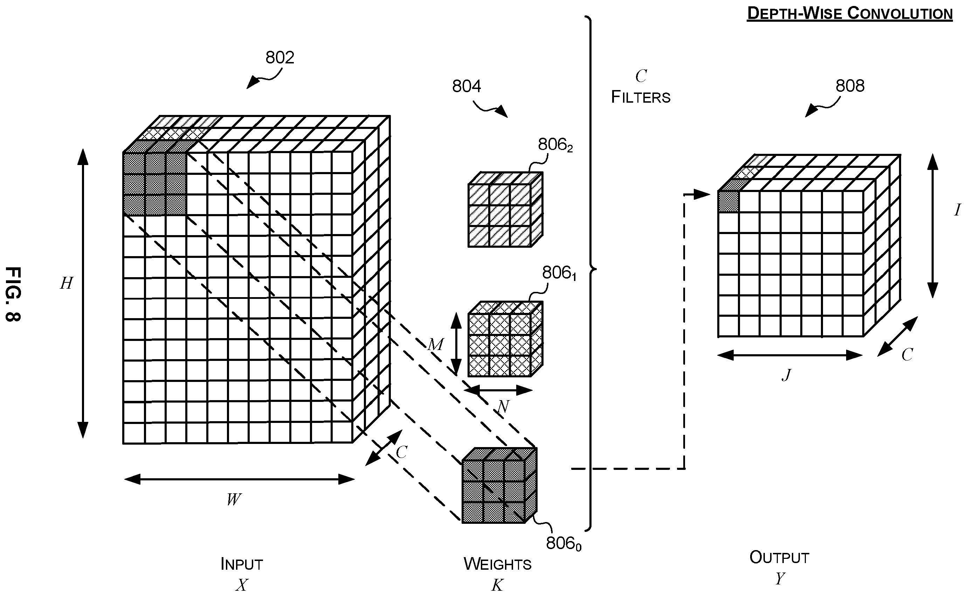

FIG. 8 illustrates an example depth-wise convolution where the channel multiplier is 1 (i.e. there is a single filter per channel of the input tensor). Specifically, FIG. 8 shows an example depth-wise convolution between a three-dimensional (3D) input tensor *X* 802 with a height *H,* width *W,* and channels *C* and a set of weights *K* 804 that form a three-dimensional (3D) tensor comprising a plurality of (e.g. *C*) 2D filters or kernels 806₀, 806₁, 806₂, with a height *M,* and width *N.* Each filter 806₀, 806₁, 806₂, is convolved with a single channel of the 3D input tensor *X* 802 to produce one channel, or one plane, of the output tensor *Y* 808. Specifically, the first channel of the input tensor 802 is convolved with the first filter 806₀, the second channel of the input tensor 802 is convolved with the second filter 806₁, and the third channel of the input tensor 802 is convolved with the third filter 806₂. Each channel of the output tensor *Y* is generated by sliding a filter 806₀, 806₁, 806₂ over a single channel of the input tensor 802 in the height dimension *H* and the width dimension *W* (in accordance with the stride(s) and dilation(s) of the convolution), and generating the dot product of the input values and the weights at each position. There may be a bias per filter which is added to the result of the corresponding dot products.

It can be seen that a depth-wise convolution is a simpler operation than a 2D convolution. Accordingly, it may be inefficient to use the complicated convolution processing unit to implement a depth-wise convolution. Thus a neural network accelerator may have specialised hardware, such as depth-wise convolution processing unit, to accelerate a depth-wise convolution. Such a depth-wise convolution processing unit thus has hardware to receive for each channel input data values, weights, and biases; and for each channel, calculate a weighted-sum of various combinations of inputs and weights, and add the bias to the weighted sum. As described above, to simplify a depth-wise convolution processing unit, the depth-wise convolution processing unit may be configured to receive integer values (rather than floating point values) and perform integer operations thereon. Such a depth-wise convolution processing unit may be referred to as an integer depth-wise convolution processing unit.

Returning back to FIG. 6, the example depth-wise convolution processing unit 504 of FIG. 6 is an integer depth-wise convolution processing unit that comprises one or more depth-wise convolution engines 602. Each depth-wise convolution engine 602 is configured to receive input integers for a channel of the input tensor, a set of integer weights associated with the channel, and an optional integer bias associated with the channel and generate a channel of the output tensor for the depth-wise convolution.

As shown in FIG. 6, each depth-wise convolution engine 602 may comprise a weighted-sum unit 604 that is configured to generate a weighted sum between a set of one or more input integers and a corresponding set of one or more weights, and a bias addition unit 606 that is configured to add the bias value to the weighted sum. The number of input integers that are used to generate the weighted sum may be configurable to support a number of filter sizes. For example, for a 1x1 depth-wise convolution (meaning the filter size is 1x1) the weighted-sum unit 604 may be configured to multiply a single input integer with a single weight. In other words, for a 1x1 depth-wise convolution each input integer of a channel of the input tensor is multiplied by the same weight. However, the weight may be different for different channels. In contrast, for a 2x2 depth-wise convolution the weighted-sum unit 604 may be configured to compute the weighted sum of 2x2 blocks of input integers with a 2x2 block of weights.

In some cases, the depth-wise convolution engines 602 may be configured to receive weights and input integers with a first predetermined maximum bit width and receive biases with a second predetermined maximum bit width, wherein the second predetermined bit width is larger than the first predetermined bit width. For example, in some cases, each depth-wise convolution engine 602 may be configured to receive low-precision weights and input values (e.g. 8 bits) and high-precision biases (e.g. 32 bits). Having relatively low-precision weights and input values may simplify the multiplication logic used to implement the weighted-sum unit 604. Having a high-precision bias may allow a higher accuracy output.

As shown in FIG. 6, each depth-wise convolution engine 602 may also comprise a clamp unit 608 that is configured to receive a value and perform a maximum clamping operation and/or a minimum clamping operation thereon. Performing a maximum clamping operation on a value comprises determining whether the value exceeds a maximum value, and if so, replacing the received value with (or resolving it to) the maximum value. Performing a minimum clamping operation on a value comprises determining whether the value falls below a minimum value, and if so, replacing the received value with (or resolving it to) that minimum value. In other words, the clamp unit 608 can be used to ensure that output tensels of an output channel fall within a desired range. The desired range may be based on where the output of the depth-wise convolution processing unit is to be sent next. For example, if the output of the depth-wise convolution processing unit is to be sent to the convolution processing unit 508 which accepts, for example, signed 8-bit integers, then the clamp unit 608 may be configured to clamp the output to the range [-128, 127]. If, however, the output of the depth-wise convolution processing unit 504 is to be sent to the re-quantisation processing unit 506 which accepts, for example, a higher precision input (e.g. 32 bit signed integers), then the clamp unit 32 may be configured to clamp the output to a 32-bit integer. If the outputs already fall within the desired range, then the clamp unit 608 may not be active. For example, if the output of the bias addition unit 606 is a 32-bit signed integer and the desired range is a 32-bit signed integer then the clamp unit may not be active. The clamp unit 608 can be used to implement a simple activation function, such as a ReLU function (i.e. *f*(*x*) = *max* (0, *x*)).

In some cases, to support input tensels in an asymmetric quantised number format, which as described in more detail below means that each tensel is represented by an integer value, a common input scale and a common zero point offset, each depth-wise convolution engine 602 may comprise a subtraction unit 610 that is configured to receive the common input zero point offset and subtract the common zero point offset from the input integer values prior to calculating the weighted sum. Similarly, to support weights in an asymmetric quantised number format each depth-wise convolution engine 602 may comprise a second subtraction unit (not shown) that is configured to subtract a weight zero point offset from the weights prior to calculating the weighted sum. While there may be a common input zero point offset for the input tensor, in some cases, there may be a weight zero point per channel.

In some cases, the depth-wise convolution processing unit 504 may comprise, or have access to, one or more storage units for storing the input values, the weights, the biases, the zero point offsets and/or the output values. For example, as shown in FIG. 6, the depth-wise convolution processing unit 504 may comprises an internal storage unit 612 for storing the parameters for a depth-wise convolution, such as, the weight(s), bias, and weight zero point (where supported) for each channel. The depth-wise convolution processing unit 504 may also have hardware, such as a fetch unit (not shown), which is configured to fetch the parameters for a depth-wise convolution from external memory and load them into the internal storage unit 612. In some cases, the depth-wise convolution processing unit 504 may have access to an external buffer which is used to temporarily store input tensels prior to processing the input tensels. Since there is a single input zero point this may be provided with the configuration information.

Having multiple depth-wise convolution engines 602 allows multiple channels of the input tensor to be processed at the same time. Depending on the number of channels in the input tensor, and the number of depth-wise convolution engines 602, a depth-wise convolution engine 602 may process more than one channel of the input tensor. For example, a first depth-wise convolution engine 602 may first receive and process a channel (e.g. channel 0) of the input tensor to generate one channel of the output tensor, and subsequently receive and process another channel (e.g. channel 5) of the input tensor to generate another channel of the output tensor. In some cases, the depth-wise convolution processing unit 504 may be configured to divide the channels of the input tensor equally amongst the depth-wise convolution engines 602. In some cases, the depth-wise convolution processing unit 504 may be configured to interleave the processing of multiple channels on a depth-wise convolution engine 602. For example, a depth-wise convolution engine 602 may be configured to generate part of the output for a first channel, generate part of the output for a second channel, and then go back to processing the first channel.

Also, although not shown in FIG. 6, where the depth-wise convolution engines are configurable (e.g. the filter size may be configurable, the use of a bias may be configurable, the use of a zero point offset may be configurable) the depth-wise convolution engines 602 may be configured to receive control information for each hardware pass that specifies how the depth-wise convolution engine 602 is to be configured for that hardware pass.

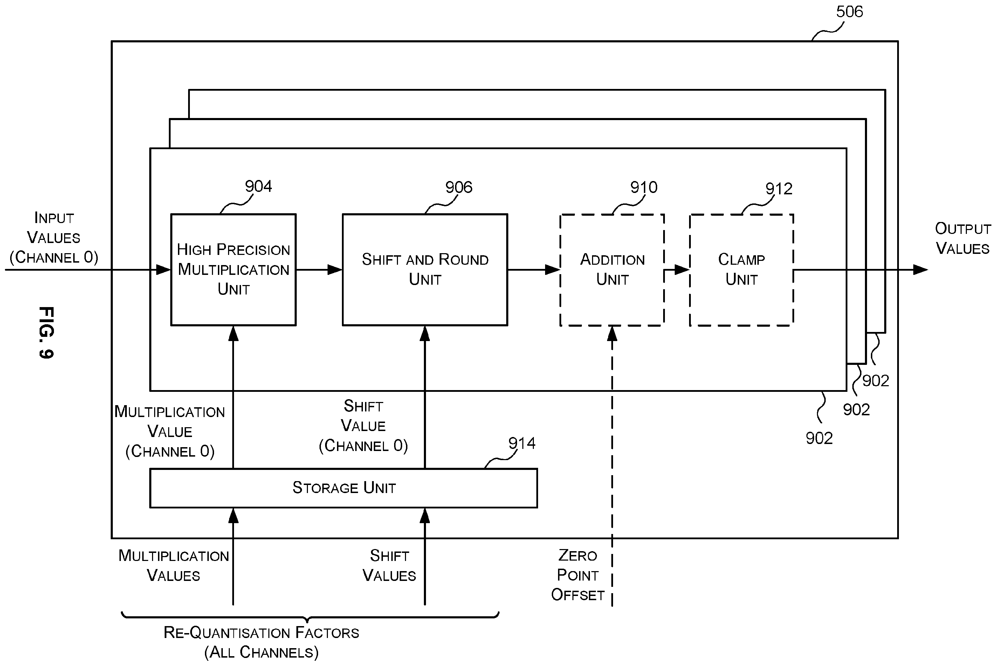

Reference is now made to FIG. 9 which illustrates an example implementation of the high-precision re-quantisation processing unit 506 of FIG. 5. As described above, the re-quantisation processing unit 506 is configured to accelerate a re-quantisation operation. The term re-quantisation is used herein to mean converting a value or set of values from one quantised format to another. Where a processing unit of a neural network accelerator can receive input tensels in an affine quantised number format (which may also be referred to as an asymmetric quantised number format) where numbers are represented by an integer, a common scale and a common zero point offset, it may be more efficient to perform some operations in such a manner that the output tensor does not accurately reflect the scale thereof. Examples of such operations include, but are not limited to, convolution operations, addition operations, and multiplication operations. Where a processing unit is configured to operate in this manner, the output of the processing unit may then be re-quantised to put it in the correct format before it is provided to another processing unit or before it is output from the NNA. A high-precision re-quantisation processing unit is configured to perform this re-quantisation. Since re-quantisation may comprise re-scaling, and optionally applying a zero point offset, a high-precision re-quantisation processing unit comprises hardware that is efficient at performing these operations.

The example re-quantisation processing unit 506 of FIG. 9 comprises one or more re-quantisation engines 902. Each re-quantisation engine 902 comprises a high-precision multiplication unit 904, and a shift and round unit 906, and is configured to receive a re-quantisation factor as a high-precision integer multiplication value (e.g. a 32 bit input values) and an integer shift value (e.g. *re - quantisation factor = multiplication value x* 2*^{shift value}*). The high-precision multiplication unit 904 is configured to generate the product of a high-precision integer input (e.g. a 32-bit input value) and the high-precision multiplication value. The shift and round unit 906 shifts the output of the high-precision multiplication unit 904 a number of bits in accordance with the shift value and when the shift is a right shift (such that the least significant bits are discarded by the shift), the shift and round unit 906 rounds the remaining bits. The magnitude of the shift value may indicate the size of the shift (e.g. number of bits). For example, a shift value with a magnitude of 2 may indicate that the output of the high-precision multiplication unit 904 is shifted two bits. Where the shift value is signed, the sign of the shift value may indicate the direction of the shift. For example, in some cases a positive shift value may indicate a right shift and a negative shift value may indicate a left shift (in such cases *quantisation factor = multiplication value x* 2*^{-shift value}*). In other cases, a positive shift value may indicate a left shift and a negative shift value may indicate a right shift (in such cases *quantisation factor = multiplication value x* 2*^{shift value}*). The shift and round unit 906 thus effectively implements a multiplication by a factor of 2, or a division by a factor of 2 and rounding.

In some cases, each re-quantisation engine 902 may also comprises an addition unit 910 which is configured to add a zero point or offset to the output of the shift and round unit 906, and a clamp unit 912 which is configured to clamp the output of the addition unit 910 to a desired range. The clamp unit 912 may operate in the same manner as the clamp unit 608 of FIG. 6.

The re-quantisation processing unit 506 is able to perform the re-quantisation on a per-tensor basis (i.e. all of the input tensels in the tensor are re-quantised in the same manner - e.g. using the same re-quantisation factor, zero point offset) - or on a per-channel basis (i.e. each channel of the input tensor may be re-quantised in a different manner - e.g. using different re-quantisation factors and/or different zero point offsets). In some cases, the re-quantisation processing unit 506 may receive control information for a hardware pass indicating how the re-quantisation processing unit 506 is to be configured for that hardware pass - e.g. whether it is to perform per channel or per-tensor re-quantisation, whether a zero point offset is to be added etc.

In some cases, the re-quantisation processing unit 506 may comprise, or have access to, one or more storage units for storing the parameters for a re-quantisation operation (e.g. multiplication values for each channel, shift values for each channel etc.). For example, as shown in FIG. 9, the re-quantisation processing unit 506 may comprises an internal storage unit 914 for storing the parameters for a re-quantisation operation (e.g. multiplication values for each channel, shift values for each channel). Although not shown, the re-quantisation processing unit 506 may comprise hardware, such as a fetch unit, to load the parameters for a re-quantisation operation from external memory into the internal storage unit 914.

As described above, the inventors have determined that a per channel quantised affine transformation can be performed efficiently and accurately on such a neural network accelerator by representing each affine transformation as an addition followed by a multiplication and performing the additions by performing, via the depth-wise convolution processing unit, a 1x1 depth-wise convolution on the input tensor using appropriate per-channel weights and biases to implement the affine transformations, and performing the multiplications by scaling, via the high-precision re-quantisation processing unit, the outputs of the depth-wise convolution processing unit, by appropriate per channel re-quantisation factors to implement the affine transformations.

As noted above, a quantised affine transformation can be written in terms of the quantised values as shown in equation (4). Separating the multiplications from the addition in equation (4) produces equation (5) (assuming *a* ≠ 0). To allow the addition to be performed by an integer addition unit, such as the bias addition unit 606 of the depth-wise convolution processing unit 504 of FIG. 6, the floating point value $\frac{b}{{as}_{x}}$ is rounded to an integer as shown in equation (6). The floating point value $\frac{b}{{as}_{x}}$ may be rounded to an integer using any suitable rounding technique, such as, but not limited to, round to nearest. ${y}_{q} = Round \left(\frac{{as}_{x}}{{s}_{y}}\left({x}_{q}+\frac{b}{{as}_{x}}\right)\right)$ ${y}_{q} = Round \left(\frac{{as}_{x}}{{s}_{y}}\left({x}_{q}+Round\left(\frac{b}{{as}_{x}}\right)\right)\right)$

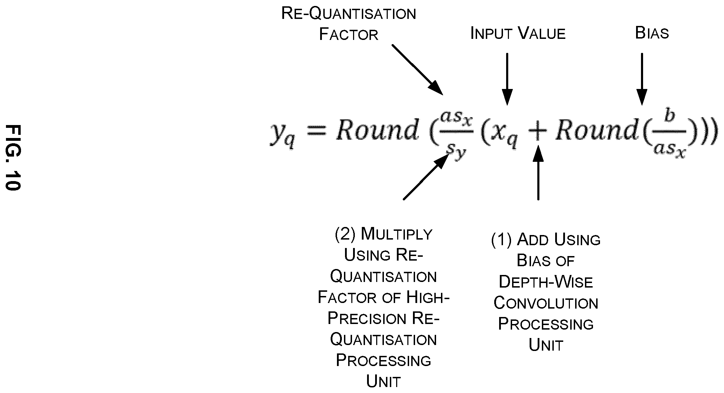

The inventors have determined that equation (6) can be efficiently and accurately implemented on a neural network accelerator, such as the neural network accelerator of FIG. 5, with a depth-wise convolution processing unit 504 and a high-precision re-quantisation processing unit 506. Specifically, as shown in FIG. 10, the addition ( ${x}_{q} + Round \left(\frac{b}{{as}_{x}}\right)$)) can be implemented by the depth-wise convolution processing unit 504 by causing the depth-wise convolution processing unit to perform a 1x1 depth-wise convolution with a per channel bias of $Round \left(\frac{b}{{as}_{x}}\right)$ and a per channel weight of 1. The multiplication ( $\frac{{as}_{x}}{{s}_{y}}$) (and rounding) can then be implemented in high-precision by the high-precision re-quantisation processing unit 506 by causing the high-precision re-quantisation processing unit 506 to perform scaling on the output of the depth-wise convolution processing unit 504 using a per-channel re-quantisation factor of $\frac{{as}_{x}}{{s}_{y}}$. In some cases, $\frac{{as}_{x}}{{s}_{y}}$ for each channel may be converted into a high-precision (e.g. 32 bit) integer and a shift value which may be used as the per channel multiplication value and the shift value respectively. This allows the multiplication to be carried out with high accuracy without a floating point multiplication. Specifically, by implementing the multiplication by $\frac{{as}_{x}}{{s}_{y}}$ as a high-precision integer multiplication plus a shift, the precision of a floating point multiplication can be achieved without having to perform floating point multiplication.

### Rounding of the Bias Value

Rounding the ratio of (i) the addition parameter b for a channel and (ii) the product of the multiplication parameter *a* for that channel and the input scale *sₓ* (i.e. $Round \left(\frac{b}{{as}_{x}}\right)$) will introduce quantisation error in the output integer value *y_{q}* with respect to the floating point implementation (i.e. where the inputs and outputs are quantised, but the affine transformation parameters (*a, b*) are in floating point (e.g. equation (5)). The input integer *x_{q}* will also have been rounded introducing quantisation error in the output integer value. The distribution of errors from rounding $\frac{b}{{as}_{x}}$ is likely to be similar to the distribution of errors from rounding x. However, in some cases, this may not produce enough accuracy - i.e., it may not replicate or emulate equation (5) (where the affine transformation is performed with quantised inputs, but floating point parameters) accurately enough.

To increase the accuracy of the output integer value *y_{q}*, $\frac{b}{{as}_{x}}$ may be upscaled by an addition scale factor of *m* before it is rounded. Specifically, if $\frac{b}{{as}_{x}}$ is small (e.g. *b* is close to *asₓ*) then rounding to the nearest integer will not produce a very accurate representation of the ratio, which will introduce quite a bit of quantisation error. Thus, to allow the rounding to produce a more accurate representation of the ratio $\frac{b}{{as}_{x}}$ the ratio may be upscaled by an addition scale factor of m before it is rounded. This requires the input integer *x_{q}* to be scaled up by the same addition scale factor. This scaling up can then be reversed by scaling $\frac{{as}_{x}}{{s}_{y}}$ by the inverse of the addition scale factor (i.e. 1/*m*). The quantised affine transformation for a channel can then be represented by equation (7). ${y}_{q} = Round \left(\frac{{as}_{x}}{{s}_{y} m}\left({mx}_{q}+Round\left(\frac{mb}{{as}_{x}}\right)\right)\right)$

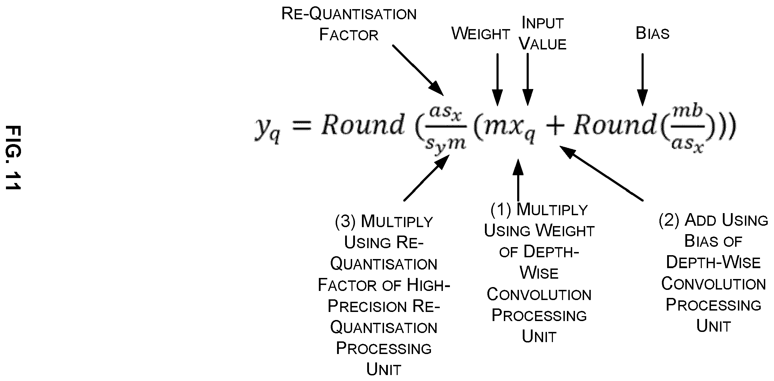

As shown in FIG. 11, this can be implemented efficiently using the depth-wise convolution processing unit 504 and the high-precision re-quantisation processing unit 506 in a similar manner as described above by causing the depth-wise convolution processing unit to perform the addition and the re-quantisation processing unit to perform the multiplication. However, instead of configuring the depth-wise convolution processing unit to perform the 1x1 depth-wise convolution on the input tensor with weights set to 1 and the bias for a channel set to $Round \left(\frac{b}{{as}_{x}}\right)$, the weight for each channel is set to the addition scale factor *m* for that channel and the bias for each channel is set to $Round \left(\frac{mb}{{as}_{x}}\right)$*.* This may make more efficient use of the depth-wise convolution processing unit 504 since, without the addition scale factor *m,* the depth-wise convolution processing unit is simply performing a multiplication by 1. Also, instead of configuring the re-quantisation processing unit to perform high-precision scaling with a re-quantisation factor per channel that is equal to, or represents, $\frac{{as}_{x}}{{s}_{y}}$, the high-precision re-quantisation processing unit 506 is configured to perform a high-precision scaling with a re-quantisation factor per channel that is equal to, or represents, $\frac{{as}_{x}}{{s}_{y} m}$.

There may be a per tensor addition scale factor *m* or a per channel addition scale factor *m.* The addition scale factor(s) may be selected in any suitable manner. For example, in some cases, a per tensor addition scale factor *m* may be selected to be the largest weight value accepted by the depth-wise convolution processing unit 504. For example, if the depth-wise convolution processing unit 504 accepts 8-bit unsigned weights such that the largest weight value accepted by the depth-wise convolution processing unit 504 is 255, then the per tensor addition scale factor *m* may be set to 255. Similarly, if the depth-wise convolution processing unit accepts 8-bit signed weights such that the largest weight value accepted by the depth-wise convolution processing unit is 127, then the per tensor addition scale factor *m* may be set to 127.

In other cases, a per tensor additional scale factor *m* may be selected to be the largest power of 2 weight accepted by the depth-wise convolution processing unit. For example, if the depth-wise convolution processing unit 504 accepts 8-bit unsigned weights such that the largest power of 2 weight accepted by the depth-wise convolution processing unit is 2⁷ = 128, then the per tensor addition scale factor *m* may be set to 2⁷ = 128. Where the high-precision scaling is implemented by the re-quantisation processing unit as an integer multiplication and a shift, this allows the inverse addition scale factor (1/*m*) to be reflected in the shift only.

In other cases, a per channel addition scale factor *m* may be selected. For example, a per channel addition scale factor m may be selected to be the *m* that minimizes the error shown in equation (8). $\left|\frac{1}{m}Round\left(\frac{mb}{{as}_{x}}\right)-\frac{b}{{as}_{x}}\right|$

Since each channel has separate multiplication and addition parameters *a* and *b,* this may allow *m* to be selected for a channel such that $\frac{mb}{{as}_{x}}$ is an integer so that there is no rounding error.

As discussed in more detail below, testing has shown that setting the addition scale factor m to any integer that is reasonably large (e.g. 16 or even 8) works well (i.e., achieves an accuracy equivalent to a floating point implementation of the affine transformation). Selecting a per channel addition scale factor *m* in accordance with equation (8) may, in some cases, improve the accuracy even more, particularly in more challenging neural networks, e.g. neural networks with low bit depths (e.g. 4 bits) or neural networks that are very sensitive to errors.

In some cases, the addition scale factor *m* (either per tensor or per channel) may be selected, or adjusted, so that the output of the bias addition unit 606 does not have to be clamped by the corresponding clamp unit 608. As described above, the clamp unit 608 is configured to clamp the output of the bias addition unit 606 to a desired integer range where the desired range may be based on, for example, which processing unit is to receive the output. So where the output is to be sent to the re-quantisation processing unit 506 then the clamp unit 608 may be configured to clamp the output to the integer range accepted by the re-quantisation processing unit 506. Accordingly, if the re-quantisation processing unit 506 accepts 32-bit inputs then ideally the output of the bias addition unit 606 is an integer within a 32-bit integer range so that it is output without clamping by the clamp unit 608. Therefore, the addition scale factor m may be selected so that the bias ( $Round \left(\frac{mb}{{as}_{x}}\right)$) plus the output of the weighted sum unit (*mx_{q}*) falls within a 32-bit integer range. For example, depending on the value of $\frac{b}{{as}_{x}}$, if the addition scale factor m is too high, the output of the bias addition unit may not fall within the 32-bit integer range.
**The *a*** = 0 case

A quantised affine transformation for a channel can be implemented as set out in equation (6) or equation (7) only if the multiplication parameter for that channel is not zero (i.e., *a* ≠ 0). This is because when the multiplication parameter for a channel is zero (i.e., *a* = 0) the implementations set out in equations (6) and (7) require a division by zero.

When the multiplication parameter for a channel is zero (i.e., *a* = 0 ), then the affine transformation becomes *y = ax + b = b.* Therefore the output integer can be represented as shown in equation (9). ${y}_{q} = Round \left(\frac{b}{{s}_{y}}\right)$

This can be implemented using the depth-wise convolution processing unit 504 and the re-quantisation processing unit 506 by setting the weight for the 1x1 convolution to be zero for that channel and setting the bias for that channel to be $Round \left(\frac{b}{{s}_{y}}\right)$ such that the depth-wise convolution processing unit will output $Round \left(\frac{b}{{s}_{y}}\right)$ for each input tensel of that channel; and setting the requantisation factor to be one for that channel, such that the output of the scaling will be $Round \left(\frac{b}{{s}_{y}}\right)$ for each input tensel of that channel. This allows the per-channel quantised affine transformation to be performed for the whole input tensor by a 1x1 depth-wise convolution performed by the depth-wise convolution processing unit and per channel scaling performed by the high-precision re-quantisation processing unit. The weight, bias and the re-quantisation factor are just selected differently for a channel wherein the multiplication parameter is zero. In some cases, the weight, bias and re-quantisation factor may be selected in this manner, not only for channels wherein the multiplication parameter is zero, but also for channels wherein the multiplication parameter is negligibly small, or substantially zero, such that the input would not affect the quantised output.

### Asymmetric Formats

In some cases, the inputs and outputs of a per channel affine transformation may be in an asymmetric quantised number format (which may also be referred to as an affine quantised number format). An asymmetric quantised number format is a number format in which the range of values represented by the number format is not symmetric about zero, i.e., the range of values is asymmetric about zero. This may be implemented by using a zero point offset in addition to an integer value and a scale. For example, an input number *x* in an asymmetric quantised number format may be expressed using equation (10) wherein *x_{q}* is an integer value, *sₓ* is the input scale factor, and *zₓ* is the input zero point offset. The zero point offset is often, but does not have to be, an integer value. An example asymmetric quantised number format is the Q8A number format. $x = \left({x}_{q}-{z}_{x}\right) ∗ {s}_{x}$

Where the inputs of a per channel affine transformation are in an asymmetric quantised number format (e.g. as shown in equation (10)) the input zero point offset *zₓ*(the zero point offset associated with the input tensor) is to be taken into account when performing the affine transformation. As described above, some depth-wise convolution processing units, such as the depth-wise convolution processing unit of FIG. 6, may comprise hardware, such as the subtraction unit 610, to remove or subtract the zero point offset from the input integers before calculating a weighted sum. In such cases, the input zero point offset may be provided to the depth-wise convolution processing unit as the zero point offset and the depth-wise convolution processing unit may automatically remove or subtract the zero point offset from the input integers before calculating the weighted sum.

Where, however, the depth-wise convolution processing unit 504 does not comprise hardware to remove or subtract a zero point offset from the input integers, the input zero point offset may be incorporated into the per-channel quantised affine transformation. To incorporate the input zero point offset into the per-channel quantised affine transformation, *x_{q}* is replaced with (*x_{q} - zₓ*) in the affine transformation equations expressed above. This results in equation (4) becoming equation (11), equation (6) becoming equation (12), and equation (7) becoming equation (13). ${y}_{q} = Round \left(\frac{1}{{s}_{y}}\left({as}_{x}{x}_{q}+b-{as}_{x}{z}_{x}\right)\right)$ ${y}_{q} = Round \left(\frac{{as}_{x}}{{s}_{y}}\left({x}_{q}+Round\left(\frac{b - {as}_{x} {z}_{x}}{{as}_{x}}\right)\right)\right)$ ${y}_{q} ′ = Round \left(\frac{{as}_{x}}{{s}_{y} m}\left({mx}_{q}+Round\left(\frac{m \left(b-{as}_{x}{z}_{x}\right)}{{as}_{x}}\right)\right)\right)$

It can be seen that this effectively replaces b with *b - azₓsₓ* in equations (4), (6) and (7). Accordingly, where the input zero point offset is incorporated into the affine transformation, the bias for each channel is set to $Round \left(\frac{m \left(b-{as}_{x}{z}_{x}\right)}{{as}_{x}}\right)$ instead of $Round \left(\frac{mb}{{as}_{x}}\right)$*.* Since all of the values for calculating the bias are known in advance, the biases can be computed 'offline' (i.e., by a component external to the neural network accelerator).

As described above, where a channel has a multiplication parameter that is equal, or substantially equal, to zero, the weight for that channel is set to zero such that the input integer is multiplied by zero, so an input zero point offset has no effect on the output of a channel that has a multiplication parameter that is equal, or substantially equal, to zero. Therefore no changes are made for a channel that has a multiplication parameter that is equal, or substantially equal, to zero to take into account an input zero point offset.

Where the output of a per channel affine transformation is to be in an asymmetric quantised number format as shown in equation (14), where *y_{q}* is an integer value, *s_{y}* is the output scale factor, and *z_{y}* is the output zero point offset, the output zero point offset is to be taken into account when performing the affine transformation. As described above, some high-precision re-quantisation processing units, such as the high-precision re-quantisation processing unit of FIG. 9, may comprise hardware, such as an addition unit 910, to add a zero point offset to the scaled output before outputting the scaled output. In such cases, the output zero point offset may be provided to the high-precision re-quantisation processing unit 506 as the zero point offset and the high-precision re-quantisation processing unit may automatically add the zero point offset to the scaled output before outputting the scaled output. $y = \left({y}_{q}-{z}_{y}\right) ∗ {s}_{y}$

Where, however, the high-precision re-quantisation processing unit 506 does not comprise hardware to add a zero point offset to the scaled value, the output zero point offset may be incorporated into the per-channel quantised affine transformation. To incorporate the output zero point offset into the per-channel quantised affine transformation, *y_{q}* is replaced with (*y_{q} - z_{y}*) in the affine transformation equations expressed above. Specifically, equation (4) becomes equation (15), equation (6) becomes equation (16), and equation (7) becomes equation (17). ${y}_{q} = Round \left(\frac{1}{{s}_{y}}\left({as}_{x}{x}_{q}+b\right)\right) + {z}_{y} = Round \left(\frac{1}{{s}_{y}}\left({as}_{x}{x}_{q}+b+{z}_{y}{s}_{y}\right)\right)$ ${y}_{q} = Round \left(\frac{{as}_{x}}{{s}_{y}}\left({x}_{q}+Round\left(\frac{b + {z}_{y} {s}_{y}}{{as}_{x}}\right)\right)\right)$ ${y}_{q} = Round \left(\frac{{as}_{x}}{{s}_{y} m}\left({mx}_{q}+Round\left(\frac{m \left(b+{z}_{y}{s}_{y}\right)}{{as}_{x}}\right)\right)\right)$

It can be seen that this effectively replaces b with *b + z_{y}s_{y}* in equations (4), (6) and (7). Accordingly, where the output zero point offset is incorporated into the per channel quantised affine transformation, the bias for each channel is set to $Round \left(\frac{m \left(b+{z}_{y}{s}_{y}\right)}{{as}_{x}}\right)$ instead of $Round \left(\frac{mb}{{as}_{x}}\right)$. Since all of the values for calculating the bias are known in advance, the biases can be computed 'offline' (e.g. by a component external to the neural network accelerator).

While an input zero point offset does not affect the output for a channel with a multiplication parameter that is equal, or substantially equal, to zero, an output zero point offset does affect the output of such a channel. Since the output is controlled solely by the bias for that channel, the output zero point offset can be incorporated into the affine transformation for a channel that has a multiplication parameter that is equal, or substantially equal, to zero by using a bias of $Round \left(\frac{b + {z}_{y} {s}_{y}}{{s}_{y}}\right)$, instead of using a bias of $Round \left(\frac{b}{{s}_{y}}\right)$.

In some cases, both the input zero point offset and the output zero point offset may be incorporated into the per channel quantised affine transformation. Equations (4), (6) and (7) then become equations (18), (19) and (20) as shown below. ${y}_{q} = Round \left(\frac{1}{{s}_{y}}\left({as}_{x}{x}_{q}+b\right)\right) + {z}_{y} = Round \left(\frac{1}{{s}_{y}}\left({as}_{x}{x}_{q}+b+{z}_{y}{s}_{y}-{as}_{x}{z}_{x}\right)\right)$ ${y}_{q} = Round \left(\frac{{as}_{x}}{{s}_{y}}\left({x}_{q}+Round\left(\frac{b + {z}_{y} {s}_{y} - {as}_{x} {z}_{x}}{{as}_{x}}\right)\right)\right)$ ${y}_{q} = Round \left(\frac{{as}_{x}}{{s}_{y} m}\left({mx}_{q}+Round\left(\frac{m \left(b+{z}_{y}{s}_{y}-{as}_{x}{z}_{x}\right)}{{as}_{x}}\right)\right)\right.$

It can be seen that this effectively replaces b with *b + z_{y}s_{y} - asₓzₓ* in equations (4), (6) and (7). Accordingly, where both the input zero point offset and the output zero point offset are incorporated into the per channel quantised affine transformation, the bias for each channel is set to $Round \left(\frac{m \left(b+{z}_{y}{s}_{y}-{as}_{x}{z}_{x}\right)}{{as}_{x}}\right)$ instead of $Round \left(\frac{mb}{{as}_{x}}\right)$. Since all of the values for calculating the bias are known in advance, the biases can be computed 'offline' (i.e. by a component external to the neural network accelerator, such as, but not limited to the CPU that controls the NNA).

Since an input zero point offset does not affect the output, this implementation (taking into account both an input zero point offset and an output zero point offset) would be the same for a channel with a zero, or substantially, zero multiplication parameter as the case where only the zero point offset is taken into account. Specifically, an output zero point offset can be incorporated into the affine transformation for such a channel by using a bias of $Round \left(\frac{b + {z}_{y} {s}_{y}}{{s}_{y}}\right)$.

Equations (6), (7), (12), (13), (16), (17), (19) and (20), which represent examples of the additions and multiplications performed for a channel with a non-zero multiplication parameter, can be generally represented as shown in equation (21) such that for each such channel the weight of the 1x1 depth-wise convolution is set to the addition scale factor *m* for the channel, the bias for the 1x1 depth-wise convolution is set to an integer that represents the ratio of (i) the product of the addition scale factor *m* for the channel and an addition variable *R* for the channel (which is based on the addition parameter *b* for the channel) and (ii) the product of the multiplication factor *a* for the channel and the input scale factor *sₓ*; and the channel re-quantisation factor for the scaling is set to the ratio of (i) the product of the multiplication parameter *a* for the channel and the input scale factor *sₓ*, and (ii) the product of the output scale factor *s_{y}* and the addition scale factor *m* for the channel. ${y}_{q} = Round \left(\frac{{as}_{x}}{{s}_{y} m}\left({mx}_{q}+Round\left(\frac{m \left(R\right)}{{as}_{x}}\right)\right)\right.$

The addition scale factor *m* and the addition variable *R* may vary between implementations. For example, in some cases, expressed by equations (6), (12), (16), (19), the additional scale factor *m* is not used to scale up the bias value prior to rounding such that m is set to 1. In other cases, the addition scale factor m may be an integer greater than one to scale up the bias value prior to rounding. Also, depending on whether the input zero point offset and/or the output zero point offset are to be incorporated into the affine transformations, the addition variable *R* may be equal to: the addition parameter *b* (equations (6), (7)); *b - asₓzₓ* (equations (12), (13)); *b + z_{y}s_{y}* (equations (16), (17)); or *b + z_{y}s_{y} - asₓzₓ* (equations (19), (20)).

Accordingly, a per channel quantised affine transformation can be performed on an input tensor using a neural network accelerator, such as the neural network accelerator of FIG. 5, with a depth-wise convolution processing unit and a high-precision re-quantisation processing unit by implementing each affine transformation as an addition followed by a multiplication by (i) implementing the additions by performing, using the depth-wise convolution processing unit, a 1x1 depth wise convolution on the input tensor using per channel weights and biases to implement the addition; and (ii) implementing the multiplications by scaling, using the high-precision re-quantisation processing unit, the values output from the depth-wise convolution processing unit by per channel re-quantisation factors to implement the multiplication. The weights and biases for the 1x1 depth-wise convolution, and the re-quantisation factors for the scaling can be selected in a number of different ways as described above.

### Method

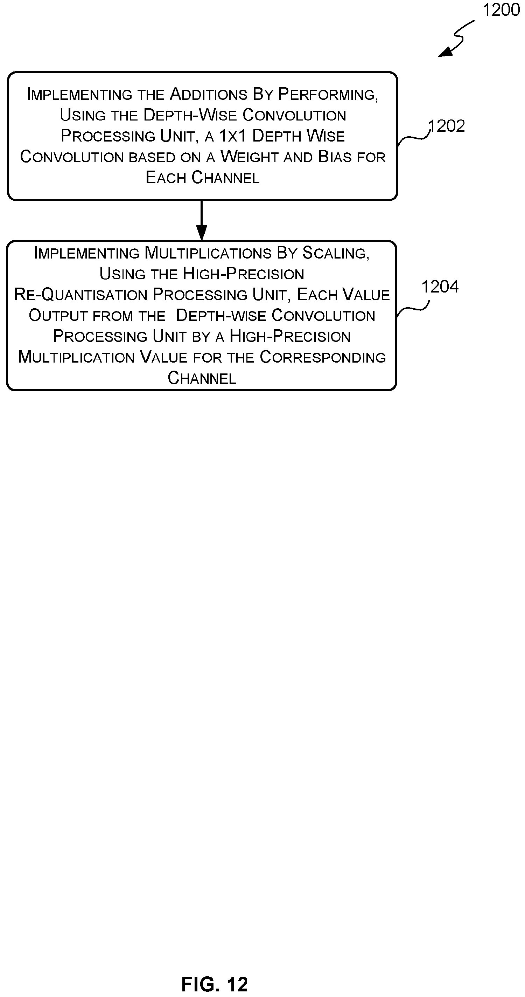

Reference is now made to FIG. 12 which illustrates an example method 1200 for performing a per-channel quantised affine transformation on an input tensor to generate an output tensor on a neural network accelerator, such as the neural network accelerator of FIG. 5, with a depth-wise convolution processing unit 504 and a high-precision re-quantisation processing unit 506. As described above, the affine transformation for a channel comprises a multiplication by a multiplication parameter *a* for the channel followed by an addition of an addition parameter b for the channel (e.g. as shown in equation (1)). The input tensor comprises a plurality of input tensels, each tensel is in a quantised number format represented by an integer value and common input scale. Similarly, the output tensor comprises a plurality of output tensels, each tensel is in a quantised number format represented by an integer value and a common output scale. The method 1200 comprises implementing each affine transformation as an addition followed by a multiplication by implementing the additions via block 1202 and the multiplications via block 1204.

Specifically, at block 1202 the additions are implemented by performing, using the depth-wise convolution processing unit 504, a 1x1 depth-wise convolution on the input tensor with suitable per channel weights and biases to implement the additions. In some cases, the weight for a channel is set to the addition scale factor m for the channel and the bias for the channel is set to an integer addition value *B* for the channel.

As described above with respect to equation (21), the integer addition value *B* for a channel that has a non-zero multiplication parameter (i.e., *a* ≠ 0) may be based on the addition parameter *b* for the channel, the addition scale factor *m* for the channel, the multiplication parameter *a* for the channel, and the common input scale *sₓ*.

For example, as described above with respect to equation (21), the integer addition value *B* for a channel that has a non-zero multiplication parameter (i.e., *a* ≠ 0) may be an integer that represents a ratio of (i) a product of the addition scale factor *m* for the channel and an addition variable *R* for the channel, and (ii) a product of the multiplication parameter *a* for the channel and the common input scale *sₓ*, wherein the addition variable *R* for a channel is based on the addition parameter b for the channel (e.g. $B = Round \left(\frac{m \left(R\right)}{{as}_{x}}\right)$).

In some cases, the addition variable *R* is equal to the addition parameter *b* for that channel (e.g. *R* = *b* - see equation (6) and equation (7)). In other cases, the addition variable *R* may be a combination of the addition parameter *b* for that channel and one or more other values. For example, where the input to the per-channel affine transformation is in an asymmetric quantised number format such that each input tensel is represented by an integer value, a common input scale and a common input zero point, to account for the common input zero point the addition variable *R* for a channel may be a difference between the addition parameter *b* for the channel and the product of the multiplication parameter for that channel, the common input scale, and the common input zero point (see, for example, equations (12) and (13)). In another example, where the output of the per-channel quantised affine transformation is to be in an asymmetric quantised number format such that each output tensel is represented by an integer value, a common output scale, and a common output zero point, to account for the common output zero point the addition variable *R* for a channel may be the combination of the addition parameter *b* for the channel and the product of the common output scale *s_{y}* and the common output zero point *z_{y}* (see, for example, equations (16) and (17)). In yet another example, where the input to the per-channel quantised affine transformation is in an asymmetric quantised number format and the output of the per-channel quantised affine transformation is to be in an asymmetric quantised number format, to account for the common input zero point and the common output zero point, the addition variable *R* for a channel may be the combination of the addition parameter *b* for the channel, the product of the common output scale *s_{y}* and the common output zero point *z_{y}*, and the product of the multiplication parameter *a* for that channel, the common input scale *sₓ*, and the common input zero point *zₓ* (see, for example, equations (19) and (20)).

The addition scale factor m for a channel that has a non-zero multiplication parameter may be an integer greater than or equal to one. In some cases, the addition scale factor m for a channel is equal to one (see, for example, equation (6)). In other cases, the addition scale factor *m* for a channel may be greater than one to scale the bias so as to improve the accuracy of the rounding of the bias value (see, for example, equation (7)). In some cases, each channel has the same addition scale factor *m.* In other cases, at least two of the channels have different addition scale factors *m.*

As described above, in some cases, for a channel that has a zero, or substantially zero, multiplication parameter (i.e., *a* = 0), the addition scale factor for that channel may be set to zero, the addition value *B* for that channel may be set to an integer that represents the ratio of the multiplication parameter *b* for that channel and the common output scale (e.g. $Round \left(\frac{b}{{s}_{y}}\right)$).

In some cases, the per channel addition values *B* may be computed 'offline' (i.e. by a component external to the neural network accelerator) and provided to the neural network accelerator as inputs. The method 1200 then proceeds to block 1204.

At block 1204 each value output from the depth-wise convolution processing unit is scaled, using the high-precision re-quantisation processing unit, by a high-precision multiplication value *A* for the corresponding channel. The high-precision multiplication value *A* for a channel is based on the multiplication parameter *a* for the channel, the addition scale factor *m* for the channel, the common input scale *sₓ* and the common output scale *s_{y}.*

As described above, in some cases the multiplication value *A* for a channel that has a non-zero multiplication parameter *a* is equal to the ratio of (i) the product of the multiplication parameter *a* for that channel and the common input scale, and (ii) the product of the common output scale *s_{y}* and the addition scale factor *m* for that channel (see, for example, equations (6) and (7)). In some cases, the multiplication value *A* for a channel that has a zero multiplication parameter (or a substantially zero multiplication parameter) may be set to one.

The method 1200 may then end.

Although FIG. 12 shows block 1204 following block 1202, in some cases at least a part of block 1202 may be performed simultaneously with at least a part of block 1204. For example, in some cases, the high-precision scaling may be performed for some output values before the 1x1 depth-wise convolution processing has been completed for the entire input tensor.

### Test Results

Table 1 shows the Top-1 and Top-5 accuracy of the ResNet V2 50 neural network using the implementation and the weights from the TIMM library when (i) the neural network was implemented in floating point (labelled "Floating point" in the Table); (i) the inputs and weights of each layer were quantised but the stand-alone batch normalisation (BN) layers were implemented in floating point (e.g. using floating point multiplication and addition parameters and only rounded at the end) (labelled "Quantised (BNs in floating point)" in the Table); and (iii) the inputs and weights of each layer were quantised and the stand-alone batch normalisation layers were implemented as described herein with a variety of different addition scale factors *m* (labelled "Quantised (BNs emulated)" in the Table). As is known to those of skill in the art, a Top-n accuracy measures how often the top n predicted classifications of a classification neural network include the correct classification.

**Table 1**

| | | Accuracy (%) | |
|---|---|---|---|
| | Addition Scale Factor *m* | Top-1 | Top-5 |
| Floating point | - | 80.43 | 95.07 |
| Quantised (BNs in floating point) | - | 78.41 | 94.11 |
| Quantised (BNs emulated) | 1 | 77.94 | 94.00 |
| | 2 | 78.16 | 93.99 |
| | 4 | 78.23 | 94.07 |
| | 8 | 78.49 | 94.10 |
| | 16 | 78.51 | 94.10 |
| | 32 | 78.43 | 94.09 |
| | 64 | 78.48 | 94.13 |
| | 128 | 78.39 | 94.13 |

As it known to those of skill in the art, the Top-n accuracy measurement isn't perfect in that it's an estimate of the probability of a correct classification that is based on a limited number of samples from the data distribution. This effectively makes the accuracy measurement a noisy estimate. Thus accuracies within 0.1% of each other are deemed to be essentially equivalent. It can be seen from Table 1 that when the stand-alone batch normalisation layers of a neural network are implemented in the manner described above (i.e., using the depth-wise convolution processing unit and the high-precision re-quantisation processing unit) the accuracy of the neural network is, at a minimum, similar to when the stand-alone batch normalisation layers of the neural network are implemented with quantised inputs, but floating point parameters, which is what the described methods are designed to emulate. However, the accuracy can more closely match that achieved by implementing the batch normalisation layers with quantised inputs, but floating point parameters, through the use of an addition scale factor *m* of 8 or higher.

Table 2 illustrates the Top-1 and Top-5 for the same neural network and the same scenarios as for Table 1, except instead of only the stand-alone batch normalisation layers being implemented as described herein, all batch normalisation layers (e.g. even those batch normalisation layers that would, in many cases, be fused with a preceding convolution layer) are implemented as described herein (i.e., using the depth-wise convolution processing unit and the high-precision re-quantisation processing unit).

**Table 2**

| | | Accuracy (%) | |
|---|---|---|---|
| | Addition Scale Factor *m* | Top-1 | Top-5 |
| Floating point | - | 80.43 | 95.07 |
| Quantised (BNs in floating point) | - | 78.19 | 94.07 |
| Quantised (BNs emulated) | 1 | 77.57 | 93.87 |
| | 2 | 78.16 | 94.05 |
| | 4 | 78.03 | 94.08 |
| | 8 | 78.36 | 94.12 |
| | 16 | 78.29 | 94.09 |
| | 32 | 78.22 | 94.13 |
| | 64 | 78.20 | 94.14 |
| | 128 | 78.26 | 94.10 |

It can be seen from Table 2 that the results are similar even when the number of batch normalisation layers is increased. Therefore increasing the number of batch normalisation layers that are implemented in the manner described herein does not affect the accuracy of the neural network.

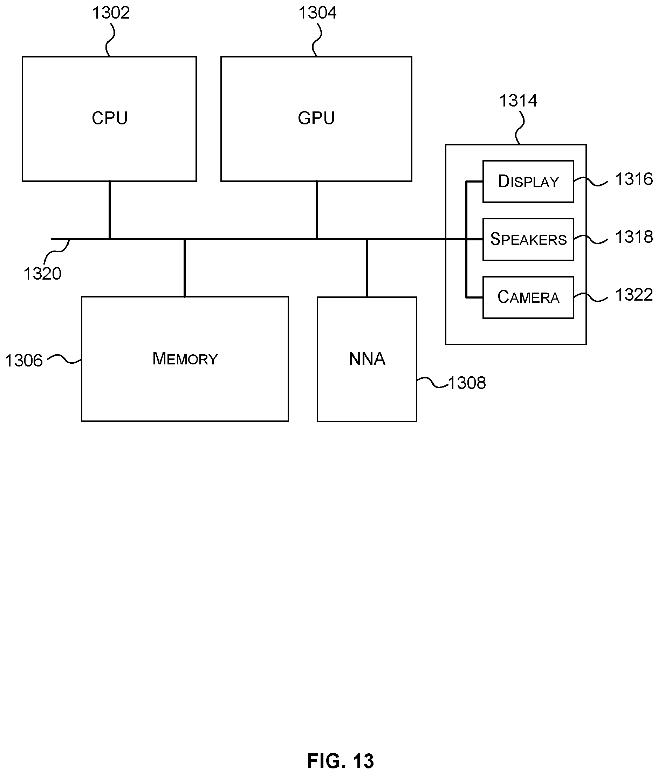

FIG. 13 shows an example computer system in which the neural network accelerators described herein may be implemented. The computer system comprises a CPU 1302, a GPU 1304, a memory 1306, a neural network accelerator (NNA) 1308 (which may be any of the neural network accelerators described herein, such as, but not limited to the NNA 500 of FIG. 5) and other devices 1314, such as a display 1316, speakers 1318 and a camera 1322. The components of the computer system can communicate with each other via a communications bus 1320.

The neural network accelerators, depth-wise convolution processing units, and re-quantisation processing units of FIGS. 5, 6 and 9 are shown as comprising a number of functional blocks. This is schematic only and is not intended to define a strict division between different logic elements of such entities. Each functional block may be provided in any suitable manner. It is to be understood that intermediate values described herein as being formed by a neural network accelerator, depth-wise convolution processing unit or re-quantisation processing unit need not be physically generated by the neural network accelerator, depth-wise convolution processing unit, or re-quantisation processing unit at any point and may merely represent logical values which conveniently describe the processing performed by the neural network accelerator, depth-wise convolution processing unit or re-quantisation processing unit between its input and output.

The neural network accelerators, depth-wise convolution processing units, and re-quantisation processing units described herein may be embodied in hardware on an integrated circuit. The neural network accelerators described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an applicationspecific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e., run) in an integrated circuit manufacturing system configures the system to manufacture a neural network accelerator configured to perform any of the methods described herein, or to manufacture a neural network accelerator comprising any apparatus described herein. An integrated circuit definition dataset may be, for example, an integrated circuit description.

Therefore, there may be provided a method of manufacturing, at an integrated circuit manufacturing system, a neural network accelerator as described herein. Furthermore, there may be provided an integrated circuit definition dataset that, when processed in an integrated circuit manufacturing system, causes the method of manufacturing a neural network accelerator to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g., providing commands, variables etc.) may be required in order for a computer system configured for generating a manufacturing definition of an integrated circuit to execute code defining an integrated circuit so as to generate the manufacturing definition of that integrated circuit.

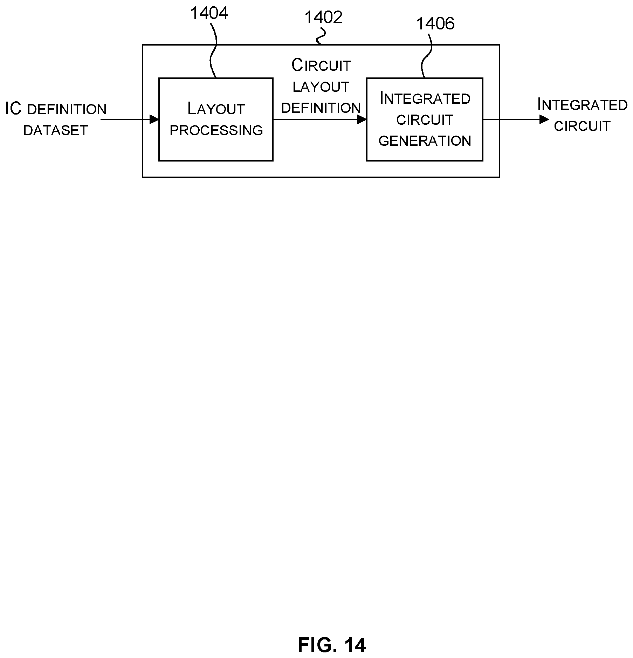

An example of processing an integrated circuit definition dataset at an integrated circuit manufacturing system so as to configure the system to manufacture a neural network accelerator will now be described with respect to FIG. 14.

FIG. 14 shows an example of an integrated circuit (IC) manufacturing system 1402 which is configured to manufacture a neural network accelerator as described in any of the examples herein. In particular, the IC manufacturing system 1402 comprises a layout processing system 1404 and an integrated circuit generation system 1406. The IC manufacturing system 1402 is configured to receive an IC definition dataset (e.g., defining a neural network accelerator as described in any of the examples herein), process the IC definition dataset, and generate an IC according to the IC definition dataset (e.g., which embodies a neural network accelerator as described in any of the examples herein). The processing of the IC definition dataset configures the IC manufacturing system 1402 to manufacture an integrated circuit embodying a neural network accelerator as described in any of the examples herein.

The layout processing system 1404 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g., in terms of logical components (e.g., NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1404 has determined the circuit layout it may output a circuit layout definition to the IC generation system 1406. A circuit layout definition may be, for example, a circuit layout description.

The IC generation system 1406 generates an IC according to the circuit layout definition, as is known in the art. For example, the IC generation system 1406 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1406 may be in the form of computer-readable code which the IC generation system 1406 can use to form a suitable mask for use in generating an IC.

The different processes performed by the IC manufacturing system 1402 may be implemented all in one location, e.g., by one party. Alternatively, the IC manufacturing system 1402 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a neural network accelerator without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g., by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to FIG. 14 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in FIG. 14, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations.

## Claims

1. A method (1200) of implementing, on a neural network accelerator, a per channel quantised affine transformation on an input tensor to generate an output tensor, the affine transformation for a channel comprising an addition of an addition parameter for the channel followed by a multiplication by a multiplication parameter for the channel, **characterised in that** the method (1200) comprising:
implementing each affine transformation as an addition followed by a multiplication by:
implementing the additions by performing, using a depth-wise convolution processing unit of the neural network accelerator, a 1x1 depth-wise convolution on the input tensor based on a weight and a bias for each channel of the input tensor, wherein the weight for a channel is set to an addition scale factor for the channel and the bias for a channel is set to an integer addition value for the channel (1202); and
implementing the multiplications by scaling, using a high-precision re-quantisation processing unit of the neural network accelerator, each value output from the depth-wise convolution processing unit, by a high-precision multiplication value for the corresponding channel (1204).

2. The method (1200) of claim 1, wherein:
the input tensor comprises a plurality of input tensels and each input tensel is in a quantised number format represented by an integer value and a common input scale;
the output tensor comprises a plurality of output tensels and each output tensel is in a quantised number format represented by an integer value and a common output scale;
the 1x1 depth-wise convolution is performed on the integer values of the input tensor; and
the high-precision re-quantisation processing unit outputs the integer values of the output tensor.

3. The method (1200) of claim 2, wherein for each channel of the input tensor that has a non-zero multiplication parameter:
the integer addition value for the channel is based on the addition parameter for the channel, the addition scale factor for the channel, the multiplication parameter for the channel, and the common input scale, and
the high-precision multiplication value for the channel is based on the multiplication parameter for the channel, the addition scale factor for the channel, the common input scale and the common output scale.

4. The method (1200) of claim 3, wherein, for each channel of the input tensor that has a non-zero multiplication parameter, the integer addition value represents a ratio of (i) a product of the addition scale factor for the channel and an addition variable for the channel and (ii) a product of the multiplication parameter for the channel and the common input scale, wherein the addition variable for the channel is based on the addition parameter for the channel.

5. The method (1200) of claim 4, wherein the addition variable for a channel is equal to the addition parameter for that channel.

6. The method (1200) of claim 4, wherein the addition variable for a channel is a combination of the addition parameter for that channel and one or more other values; and optionally
wherein each input tensel is in an asymmetric quantised number format based on a common input zero point, and the addition variable for a channel is a difference between the addition parameter for the channel and a product of the multiplication parameter for that channel, the common input scale, and the common input zero point;
wherein each output tensel is in an asymmetric quantised number format based on a common output zero point, and the addition variable for a channel is a combination of the addition parameter for the channel and a product of the common output scale and the common output zero point; or
wherein each input tensel is in an asymmetric quantised number format based on a common input zero point and each output tensel is in an asymmetric quantised number format based on a common output zero point, and the addition variable for a channel is a combination of the addition parameter for the channel, the product of the common output scale and the common output zero point, and the product of the multiplication parameter for that channel, the common input scale, and the common input zero point.

7. The method (1200) of any of claims 2 to 6, wherein, for each channel of the input tensor that has a non-zero multiplication parameter, the high-precision multiplication value for the channel represents a ratio of (i) the product of the multiplication parameter for the channel and the common input scale, and (ii) the product of the common output scale and the addition scale factor for that channel.

8. The method (1200) of any preceding claim, wherein, for each channel of the input tensor that has a non-zero multiplication parameter, the addition scale factor is an integer greater than or equal to one.

9. The method (1200) of claim 8, wherein each channel of the input tensor that has a non-zero multiplication parameter has a same addition scale factor; and, optionally,
wherein the addition scale factor for each channel of the input tensor that has a non-zero multiplication parameter is a largest weight accepted by the depth-wise convolution processing unit; or
wherein the addition scale factor for each channel of the input tensor that has a non-zero multiplication parameter is a largest power of two weight accepted by the depth-wise convolution processing unit.

10. The method (1200) of any of claims 2 to 9, when dependent on claim 2, wherein, for each channel of the input tensor that has a multiplication parameter that is zero, or substantially zero:
the addition scale factor for the channel is equal to zero;
the integer addition value for the channel is an integer that represents a ratio of the addition parameter for the channel and the common output scale; and
the high-precision multiplication value for the channel is equal to one.

11. The method (1200) of any preceding claim, wherein the high-precision re-quantisation processing unit is configured to scale an input value by multiplying the input value by a high-precision multiplication input and shifting the output of the multiplication in accordance with a shift value, and the high-precision multiplication value for a channel is provided to the high-precision re-quantisation processing unit as a multiplication input and a shift value.

12. The method (1200) of any of claims 2 to 5 and 7 to 11, when dependent on claim 2, wherein the depth-wise convolution processing unit comprises hardware to remove a zero point from the input integer values, and the method further comprises, when the input tensels are in an asymmetric quantised number format based on a common input zero point, causing the depth-wise convolution processing unit to remove the common input zero point from the received input integers of channels of the input tensor with a non-zero multiplication parameter, prior to performing the 1x1 depth-wise convolution; and/or wherein the high-precision re-quantisation processing unit comprises hardware to add a zero point to scaled values, and the method further comprises, when the output tensels are in an asymmetric quantised number format based on a common output zero point, causing the high-precision re-quantisation processing unit to add the common output zero point to the scaled values corresponding to channels of the input tensor with a non-zero multiplication parameter.

13. The method (1200) of any preceding claim, wherein the neural network accelerator comprises a convolution processing unit configured to accelerate the processing of two-dimensional convolution operations and the convolution processing unit is separate and distinct from the depth-wise convolution processing unit.

14. A neural network accelerator (500) comprising:
a depth-wise convolution processing unit (504) configured to accelerate processing of a depth-wise convolution on a received input tensor; and
a high-precision re-quantisation processing unit (506) configured to accelerate processing of a per channel re-quantisation operation on a received input tensor;
wherein the neural network accelerator (500) is configured to perform a per channel quantised affine transformation on an input tensor to generate an output tensor, the affine transformation for a channel comprising an addition of an addition parameter for that channel followed by a multiplication by a multiplication parameter for the channel, **characterised by**:
implementing each affine transformation as an addition followed by a multiplication by:
implementing the additions by performing, using the depth-wise convolution processing unit (504), a 1x1 depth-wise convolution on the input tensor based on a weight and a bias for each channel of the input tensor, wherein the weight for a channel is set to an addition scale factor for the channel and the bias for a channel is set to an integer addition value for the channel; and
implementing the multiplications by scaling, using the high-precision re-quantisation processing unit (506), each value output from the depth-wise convolution processing unit, by a high-precision multiplication value for the corresponding channel.

15. A non-transitory computer readable storage medium having stored thereon computer readable code configured to cause a neural network accelerator to perform the method as set forth in any of claims 1 to 13 when the code is run, the neural network accelerator comprising a depth-wise convolution processing unit configured to accelerate processing of a depth-wise convolution on a received input tensor and a high-precision re-quantisation processing unit configured to accelerate processing of a per channel re-quantisation operation on a received input tensor.

## Patentansprüche

1. Verfahren (1200) zum Implementieren, auf einem neuronalen Netzwerkbeschleuniger, einer pro Kanal quantisierten affinen Transformation auf einem Eingabetensor, um einen Ausgabetensor zu erzeugen, wobei die affine Transformation für einen Kanal eine Addition eines Additionsparameters für den Kanal, gefolgt von einer Multiplikation mit einem Multiplikationsparameter für den Kanal, umfasst, **dadurch gekennzeichnet, dass** das Verfahren (1200) umfasst:
Implementieren jeder affinen Transformation als Addition, gefolgt von einer Multiplikation, durch:
Implementieren der Additionen durch Durchführen einer 1x1-Tiefenfaltung an dem Eingabetensor unter Verwendung einer tiefenweisen Faltungsverarbeitungseinheit des neuronalen Netzwerkbeschleunigers basierend auf einer Gewichtung und einer Verzerrung für jeden Kanal des Eingabetensors, wobei die Gewichtung für einen Kanal auf einen Additionsskalierungsfaktor für den Kanal eingestellt ist und die Verzerrung für einen Kanal auf einen ganzzahligen Additionswert für den Kanal eingestellt ist (1202); und
Implementieren der Multiplikationen durch Skalieren, unter Verwendung einer hochgenauen Requantisierungsverarbeitungseinheit des neuronalen Netzwerkbeschleunigers, jedes von der tiefenweisen Faltungsverarbeitungseinheit ausgegebenen Wertes mit einem hochgenauen Multiplikationswert für den entsprechenden Kanal (1204).

2. Verfahren (1200) nach Anspruch 1, wobei:
der Eingabetensor eine Vielzahl von Eingabetenseln umfasst und jedes Eingabetensel in einem quantisierten Zahlenformat vorliegt, dargestellt durch einen ganzzahligen Wert und eine gemeinsame Eingabeskala;
der Ausgabetensor eine Vielzahl von Ausgabetenseln umfasst und jedes Ausgabetensel in einem quantisierten Zahlenformat vorliegt, dargestellt durch einen ganzzahligen Wert und eine gemeinsame Ausgabeskala;
die 1x1-Tiefenfaltung an den ganzzahligen Werten des Eingabetensors durchgeführt wird; und
die hochgenaue Requantisierungsverarbeitungseinheit die ganzzahligen Werte des Ausgabetensors ausgibt.

3. Verfahren (1200) nach Anspruch 2, wobei für jeden Kanal des Eingabetensors, der einen Multiplikationsparameter aufweist, der nicht null ist:
der ganzzahlige Additionswert für den Kanal auf dem Additionsparameter für den Kanal, dem Additionsskalierungsfaktor für den Kanal, dem Multiplikationsparameter für den Kanal und der gemeinsamen Eingabeskala basiert, und
der hochgenaue Multiplikationswert für den Kanal auf dem Multiplikationsparameter für den Kanal, dem Additionsskalierungsfaktor für den Kanal, der gemeinsamen Eingabeskala und der gemeinsamen Ausgabeskala basiert.

4. Verfahren (1200) nach Anspruch 3, wobei für jeden Kanal des Eingabetensors, der einen Multiplikationsparameter ungleich null aufweist, der ganzzahlige Additionswert ein Verhältnis von (i) einem Produkt des Additionsskalierungsfaktors für den Kanal und einer Additionsvariablen für den Kanal und (ii) einem Produkt des Multiplikationsparameters für den Kanal und der gemeinsamen Eingabeskala darstellt, wobei die Additionsvariable für den Kanal auf dem Additionsparameter für den Kanal basiert.

5. Verfahren (1200) nach Anspruch 4, wobei die Additionsvariable für einen Kanal gleich dem Additionsparameter für diesen Kanal ist.

6. Verfahren (1200) nach Anspruch 4, wobei die Additionsvariable für einen Kanal eine Kombination des Additionsparameters für diesen Kanal und einem oder mehreren anderen Werten ist; und optional
wobei jeder Eingabetensel in einem asymmetrischen quantisierten Zahlenformat basierend auf einem gemeinsamen Eingabenullpunkt vorliegt und die Additionsvariable für einen Kanal eine Differenz zwischen dem Additionsparameter für den Kanal und einem Produkt des Multiplikationsparameters für diesen Kanal, der gemeinsamen Eingabeskala und des gemeinsamen Eingabenullpunkts ist;
wobei jeder Ausgabetensel in einem asymmetrischen quantisierten Zahlenformat basierend auf einem gemeinsamen Ausgabenullpunkt vorliegt und die Additionsvariable für einen Kanal eine Kombination des Additionsparameters für den Kanal und eines Produkts der gemeinsamen Ausgabeskala und des gemeinsamen Ausgabenullpunkts ist; oder
wobei jeder Eingabetensel in einem asymmetrischen quantisierten Zahlenformat basierend auf einem gemeinsamen Eingabenullpunkt vorliegt und jeder Ausgabetensel in einem asymmetrischen quantisierten Zahlenformat basierend auf einem gemeinsamen Ausgabenullpunkt vorliegt und die Additionsvariable für einen Kanal eine Kombination aus dem Additionsparameter für den Kanal, dem Produkt der gemeinsamen Ausgabeskala und des gemeinsamen Ausgabenullpunkts und dem Produkt des Multiplikationsparameters für diesen Kanal, der gemeinsamen Eingabeskala und des gemeinsamen Eingabenullpunkts ist.

7. Verfahren (1200) nach einem der Ansprüche 2 bis 6, wobei für jeden Kanal des Eingabetensors, der einen Multiplikationsparameter ungleich null aufweist, der hochgenaue Multiplikationswert für den Kanal ein Verhältnis von (i) dem Produkt des Multiplikationsparameters für den Kanal und der gemeinsamen Eingabeskala und (ii) dem Produkt der gemeinsamen Ausgabeskala und dem Additionsskalierungsfaktor für diesen Kanal darstellt.

8. Verfahren (1200) nach einem der vorhergehenden Ansprüche, wobei, für jeden Kanal des Eingabetensors, der einen Multiplikationsparameter ungleich null aufweist, der Additionsskalierungsfaktor eine ganze Zahl größer als oder gleich eins ist.

9. Verfahren (1200) nach Anspruch 8, wobei jeder Kanal des Eingabetensors, der einen Multiplikationsparameter ungleich null aufweist, einen gleichen Additionsskalierungsfaktor aufweist; und optional,
wobei der Additionsskalierungsfaktor für jeden Kanal des Eingabetensors, der einen Multiplikationsparameter ungleich Null aufweist, eine größte Gewichtung ist, die von der tiefenweisen Faltungsverarbeitungseinheit akzeptiert wird; oder
wobei der Additionsskalierungsfaktor für jeden Kanal des Eingabetensors, der einen Multiplikationsparameter ungleich Null aufweist, eine größte Potenz-von-zwei-Gewichtung ist, die von der tiefenweisen Faltungsverarbeitungseinheit akzeptiert wird.

10. Verfahren (1200) nach einem der Ansprüche 2 bis 9, wenn abhängig von Anspruch 2, wobei, für jeden Kanal des Eingabetensors, der einen Multiplikationsparameter aufweist, der Null ist oder im Wesentlichen Null ist:
der Additionsskalierungsfaktor für den Kanal gleich Null ist;
der ganzzahlige Additionswert für den Kanal eine ganze Zahl ist, die ein Verhältnis des Additionsparameters für den Kanal und die gemeinsame Ausgabeskala darstellt; und
der hochgenaue Multiplikationswert für den Kanal gleich eins ist.

11. Verfahren (1200) nach einem der vorhergehenden Ansprüche, wobei die hochgenaue Requantisierungsverarbeitungseinheit konfiguriert ist zum Skalieren eines Eingabewertes durch Multiplizieren des Eingabewerts durch eine hochgenaue Multiplikationseingabe und Verschieben der Ausgabe der Multiplikation gemäß einem Verschiebungswert, und der hochgenaue Multiplikationswert für einen Kanal der hochgenauen Requantisierungsverarbeitungseinheit als eine Multiplikationseingabe und ein Verschiebungswert bereitgestellt wird.

12. Verfahren (1200) nach einem der Ansprüche 2 bis 5 und 7 bis 11, wenn abhängig von Anspruch 2, wobei die tiefenweise Faltungsverarbeitungseinheit Hardware umfasst, um einen Nullpunkt aus den Eingabeganzzahlwerten zu entfernen, und wobei das Verfahren ferner umfasst, wenn die Eingabetensoren in einem asymmetrisch quantisierten Zahlenformat basierend auf einem gemeinsamen Eingabenullpunkt vorliegen, Veranlassen der tiefenweisen Faltungsverarbeitungseinheit zum Entfernen des gemeinsamen Eingabenullpunkts aus den empfangenen Eingabeganzzahlen von Kanälen des Eingabetensors mit einem Multiplikationsparameter ungleich Null, bevor die 1x1-Tiefenfaltung ausgeführt wird; und/oder
wobei die hochgenaue Requantisierungsverarbeitungseinheit Hardware umfasst, um einen Nullpunkt zu skalierten Werten zu addieren, und das Verfahren ferner umfasst, wenn die Ausgabetensoren in einem asymmetrisch quantisierten Zahlenformat basierend auf einem gemeinsamen Ausgabenullpunkt vorliegen, Veranlassen der hochgenauen Requantisierungsverarbeitungseinheit, den gemeinsamen Ausgabenullpunkt zu den skalierten Werten zu addieren, die Kanälen des Eingabetensors mit einem Multiplikationsparameter ungleich Null entsprechen.

13. Verfahren (1200) nach einem der vorhergehenden Ansprüche, wobei der neuronale Netzwerkbeschleuniger eine Faltungsverarbeitungseinheit umfasst, die konfiguriert ist, die Verarbeitung von zweidimensionalen Faltungsoperationen zu beschleunigen, und die Faltungsverarbeitungseinheit von der tiefenweisen Faltungsverarbeitungseinheit getrennt und verschieden ist.

14. Neuronaler Netzwerkbeschleuniger (500), umfassend:
eine tiefenweise Faltungsverarbeitungseinheit (504), die konfiguriert ist, das Verarbeiten einer tiefenweisen Faltung an einem empfangenen Eingabetensor zu beschleunigen; und
eine hochgenaue Requantisierungsverarbeitungseinheit (506), die konfiguriert ist, das Verarbeiten einer Requantisierungsoperation pro Kanal an einem empfangenen Eingabetensor zu beschleunigen;
wobei der neuronale Netzwerkbeschleuniger (500) so konfiguriert ist, dass er eine pro Kanal quantisierte affine Transformation an einem Eingabetensor durchführt, um einen Ausgabetensor zu erzeugen, wobei die affine Transformation für einen Kanal eine Addition eines Additionsparameters für diesen Kanal gefolgt von einer Multiplikation mit einem Multiplikationsparameter für den Kanal umfasst, **gekennzeichnet durch**:
Implementieren jeder affinen Transformation als Addition, gefolgt von einer Multiplikation, **durch**:
Implementieren der Additionen **durch** Ausführen, unter Verwendung der tiefenweisen Faltungsverarbeitungseinheit (504), einer 1x1-Tiefenfaltung an dem Eingabetensor basierend auf einer Gewichtung und einer Verzerrung für jeden Kanal des Eingabetensors, wobei die Gewichtung für einen Kanal auf einen Additionsskalierungsfaktor für den Kanal eingestellt ist und die Verzerrung für einen Kanal auf einen ganzzahligen Additionswert für den Kanal eingestellt ist; und
Implementieren der Multiplikationen **durch** Skalieren, unter Verwendung der hochgenauen Requantisierungsverarbeitungseinheit (506), jedes von der tiefenweisen Faltungsverarbeitungseinheit ausgegebenen Wertes **durch** einen hochgenauen Multiplikationswert für den entsprechenden Kanal.

15. Nichtflüchtiges computerlesbares Speichermedium, auf dem computerlesbarer Code gespeichert ist, der so konfiguriert ist, dass er einen neuronalen Netzwerkbeschleuniger veranlasst, das Verfahren nach einem der Ansprüche 1 bis 13 auszuführen, wenn der Code ausgeführt wird, wobei der neuronale Netzwerkbeschleuniger eine tiefenweise Faltungsverarbeitungseinheit umfasst, die konfiguriert ist, das Verarbeiten einer tiefenweisen Faltung an einem empfangenen Eingabetensor zu beschleunigen, und eine hochgenaue Requantisierungsverarbeitungseinheit, die konfiguriert ist, das Verarbeiten einer Requantisierungsoperation pro Kanal an einem empfangenen Eingabetensor zu beschleunigen.

## Revendications

1. Procédé (1200) de mise en œuvre, sur un accélérateur de réseau neuronal, d'une transformation affine quantifiée par canal sur un tenseur d'entrée pour générer un tenseur de sortie, la transformation affine pour un canal comprenant une addition d'un paramètre d'addition pour le canal suivie d'une multiplication par un paramètre de multiplication pour le canal, **caractérisé en ce que** le procédé (1200) comprend :
la mise en œuvre de chaque transformation affine comme une addition suivie d'une multiplication par :
la mise en œuvre des additions en réalisant, à l'aide d'une unité de traitement de convolution en profondeur de l'accélérateur de réseau neuronal, une convolution en profondeur 1x1 sur le tenseur d'entrée sur la base d'un poids et d'un biais pour chaque canal du tenseur d'entrée, dans lequel le poids pour un canal est réglé à un facteur d'échelle d'addition pour le canal et le biais pour un canal est réglé à une valeur d'addition entière pour le canal (1202) ; et
la mise en œuvre des multiplications en mettant à l'échelle, à l'aide d'une unité de traitement de requantification de haute précision de l'accélérateur de réseau neuronal, chaque valeur fournie en sortie de l'unité de traitement de convolution en profondeur, par une valeur de multiplication de haute précision pour le canal (1204) correspondant.

2. Procédé (1200) selon la revendication 1, dans lequel :
le tenseur d'entrée comprend une pluralité de tensels d'entrée et chaque tensel d'entrée est dans un format de nombre quantifié représenté par une valeur entière et une échelle d'entrée commune ;
le tenseur de sortie comprend une pluralité de tensels de sortie et chaque tensel de sortie est dans un format de nombre quantifié représenté par une valeur entière et une échelle de sortie commune ;
la convolution en profondeur 1x1 est réalisée sur les valeurs entières du tenseur d'entrée ; et
l'unité de traitement de requantification de haute précision fournit les valeurs entières du tenseur de sortie.

3. Procédé (1200) selon la revendication 2, dans lequel pour chaque canal du tenseur d'entrée qui a un paramètre de multiplication non nul :
la valeur d'addition entière pour le canal est basée sur le paramètre d'addition pour le canal, le facteur d'échelle d'addition pour le canal, le paramètre de multiplication pour le canal et l'échelle d'entrée commune, et
la valeur de multiplication de haute précision pour le canal est basée sur le paramètre de multiplication pour le canal, le facteur d'échelle d'addition pour le canal, l'échelle d'entrée commune et l'échelle de sortie commune.

4. Procédé (1200) selon la revendication 3, dans lequel, pour chaque canal du tenseur d'entrée qui a un paramètre de multiplication non nul, la valeur d'addition entière représente un rapport entre (i) un produit du facteur d'échelle d'addition pour le canal et d'une variable d'addition pour le canal et (ii) un produit du paramètre de multiplication pour le canal et de l'échelle d'entrée commune, dans lequel la variable d'addition pour le canal est basée sur le paramètre d'addition pour le canal.

5. Procédé (1200) selon la revendication 4, dans lequel la variable d'addition pour un canal est égale au paramètre d'addition pour ce canal.

6. Procédé (1200) selon la revendication 4, dans lequel la variable d'addition pour un canal est une combinaison du paramètre d'addition pour ce canal et d'une ou plusieurs autres valeurs ; et facultativement
dans lequel chaque tensel d'entrée est dans un format de nombre quantifié asymétrique basé sur un point zéro d'entrée commun, et la variable d'addition pour un canal est une différence entre le paramètre d'addition pour le canal et un produit du paramètre de multiplication pour ce canal, de l'échelle d'entrée commune et du point zéro d'entrée commun ;
dans lequel chaque tensel de sortie est dans un format de nombre quantifié asymétrique basé sur un point zéro de sortie commun, et la variable d'addition pour un canal est une combinaison du paramètre d'addition pour le canal et d'un produit de l'échelle de sortie commune et du point zéro de sortie commun ; ou
dans lequel chaque tensel d'entrée est dans un format de nombre quantifié asymétrique basé sur un point zéro d'entrée commun et chaque tensel de sortie est dans un format de nombre quantifié asymétrique basé sur un point zéro de sortie commun, et la variable d'addition pour un canal est une combinaison du paramètre d'addition pour le canal, du produit de l'échelle de sortie commune et du point zéro de sortie commun, et du produit du paramètre de multiplication pour ce canal, de l'échelle d'entrée commune et du point zéro d'entrée commun.

7. Procédé (1200) selon l'une quelconque des revendications 2 à 6, dans lequel, pour chaque canal du tenseur d'entrée qui a un paramètre de multiplication non nul, la valeur de multiplication de haute précision pour le canal représente un rapport entre (i) le produit du paramètre de multiplication pour le canal et de l'échelle d'entrée commune, et (ii) le produit de l'échelle de sortie commune et du facteur d'échelle d'addition pour ce canal.

8. Procédé (1200) selon une quelconque revendication précédente, dans lequel, pour chaque canal du tenseur d'entrée qui a un paramètre de multiplication non nul, le facteur d'échelle d'addition est un entier supérieur ou égal à un.

9. Procédé (1200) selon la revendication 8, dans lequel chaque canal du tenseur d'entrée qui a un paramètre de multiplication non nul a un même facteur d'échelle d'addition ; et, facultativement,
dans lequel le facteur d'échelle d'addition pour chaque canal du tenseur d'entrée qui a un paramètre de multiplication non nul est le poids le plus grand accepté par l'unité de traitement de convolution en profondeur ; ou
dans lequel le facteur d'échelle d'addition pour chaque canal du tenseur d'entrée qui a un paramètre de multiplication non nul est le poids à la puissance de deux le plus grand accepté par l'unité de traitement de convolution en profondeur.

10. Procédé (1200) selon l'une quelconque des revendications 2 à 9, lorsqu'elles dépendent de la revendication 2, dans lequel, pour chaque canal du tenseur d'entrée qui a un paramètre de multiplication qui est nul, ou sensiblement nul :
le facteur d'échelle d'addition pour le canal est égal à zéro ;
la valeur d'addition entière pour le canal est un entier qui représente un rapport entre le paramètre d'addition pour le canal et l'échelle de sortie commune ; et
la valeur de multiplication de haute précision pour le canal est égale à un.

11. Procédé (1200) selon une quelconque revendication précédente, dans lequel l'unité de traitement de requantification de haute précision est configurée pour mettre à l'échelle une valeur d'entrée en multipliant la valeur d'entrée par une entrée de multiplication de haute précision et en décalant la sortie de la multiplication conformément à une valeur de décalage, et la valeur de multiplication de haute précision pour un canal est fournie à l'unité de traitement de requantification de haute précision en tant qu'entrée de multiplication et valeur de décalage.

12. Procédé (1200) selon l'une quelconque des revendications 2 à 5 et 7 à 11, lorsqu'elles dépendent de la revendication 2, dans lequel l'unité de traitement de convolution en profondeur comprend du matériel pour éliminer un point zéro des valeurs entières d'entrée, et le procédé comprend en outre, lorsque les tenseurs d'entrée sont dans un format de nombre quantifié asymétrique basé sur un point zéro d'entrée commun, le fait de provoquer l'élimination, par l'unité de traitement de convolution en profondeur, du point zéro d'entrée commun des entiers d'entrée reçus des canaux du tenseur d'entrée avec un paramètre de multiplication non nul, avant de réaliser la convolution en profondeur 1x1 ; et/ou
dans lequel l'unité de traitement de requantification de haute précision comprend du matériel pour ajouter un point zéro à des valeurs mises à l'échelle, et le procédé comprend en outre, lorsque les tenseurs de sortie sont dans un format de nombre quantifié asymétrique basé sur un point zéro de sortie commun, l'ajout, par l'unité de traitement de requantification de haute précision, du point zéro de sortie commun aux valeurs mises à l'échelle correspondant aux canaux du tenseur d'entrée avec un paramètre de multiplication non nul.

13. Procédé (1200) selon une quelconque revendication précédente, dans lequel l'accélérateur de réseau neuronal comprend une unité de traitement de convolution configurée pour accélérer le traitement d'opérations de convolution bidimensionnelles et l'unité de traitement de convolution est séparée et distincte de l'unité de traitement de convolution en profondeur.

14. Accélérateur de réseau neuronal (500) comprenant :
une unité de traitement de convolution en profondeur (504) configurée pour accélérer le traitement d'une convolution en profondeur sur un tenseur d'entrée reçu ; et
une unité de traitement de requantification de haute précision (506) configurée pour accélérer le traitement d'une opération de requantification par canal sur un tenseur d'entrée reçu ;
dans lequel l'accélérateur de réseau neuronal (500) est configuré pour réaliser une transformation affine quantifiée par canal sur un tenseur d'entrée pour générer un tenseur de sortie, la transformation affine pour un canal comprenant une addition d'un paramètre d'addition pour ce canal suivie d'une multiplication par un paramètre de multiplication pour le canal, **caractérisé par** :
la mise en œuvre de chaque transformation affine comme une addition suivie d'une multiplication par :
la mise en œuvre des additions en réalisant, à l'aide de l'unité de traitement de convolution en profondeur (504), une convolution en profondeur 1x1 sur le tenseur d'entrée sur la base d'un poids et d'un biais pour chaque canal du tenseur d'entrée, dans lequel le poids pour un canal est réglé à un facteur d'échelle d'addition pour le canal et le biais pour un canal est réglé à une valeur d'addition entière pour le canal ; et
la mise en œuvre des multiplications en mettant à l'échelle, à l'aide de l'unité de traitement de requantification de haute précision (506), chaque valeur fournie en sortie de l'unité de traitement de convolution en profondeur, par une valeur de multiplication de haute précision pour le canal correspondant.

15. Support de stockage non transitoire lisible par ordinateur sur lequel est stocké un code lisible par ordinateur configuré pour amener un accélérateur de réseau neuronal à réaliser le procédé selon l'une quelconque des revendications 1 à 13 lorsque le code est exécuté, l'accélérateur de réseau neuronal comprenant une unité de traitement de convolution en profondeur configurée pour accélérer le traitement d'une convolution en profondeur sur un tenseur d'entrée reçu et une unité de traitement de requantification de haute précision configurée pour accélérer le traitement d'une opération de requantification par canal sur un tenseur d'entrée reçu.
